(19) **Europäisches Patentamt / European Patent Office / Office européen des brevets**

(11) **EP 2 120 036 B1**

(12) **EUROPEAN PATENT SPECIFICATION**

(45) Date of publication and mention
of the grant of the patent:
**18.07.2012 Bulletin 2012/29**

(51) Int Cl.:
*G01Q 70/04* (2010.01)  *B82Y 35/00* (2011.01)

(21) Application number: **08009131.7**

(22) Date of filing: **16.05.2008**

(54) **Measuring probe having one or more support elements for a measuring instrument**

Messsonde mit einem oder mehreren Stützelementen für ein Messinstrument

Sonde de mesure dotée d'un ou plus éléments de support pour un instrument de mesure

(84) Designated Contracting States:
**DE FR GB IT**

(43) Date of publication of application:
**18.11.2009 Bulletin 2009/47**

(73) Proprietors:
• **Mitutoyo Corporation
Kawasaki-shi,
Kanagawa 213-8533 (JP)**
• **Bundesrepublik Deutschland
endvertreten durch den Präsidenten der
Physikalisch-Technischen Bundesanstalt
38116 Braunschweig (DE)**

(72) Inventors:
• **Danzebrink, Dr. Hans-Ullrich
38124 Braunschweig (DE)**

• **Hidaka, Kazuhiko,
c/o Mitutoyo Research Center Europe BV
5684 PJ Best (NL)**
• **Illers, Hartmut
38729 Hahausen (DE)**
• **Saito, Akinori
Tsukuba-shi, Ibaraki-ken 305-0854 (JP)**

(74) Representative: **Grünecker, Kinkeldey,
Stockmair & Schwanhäusser
Leopoldstrasse 4
80802 München (DE)**

(56) References cited:
**EP-A- 0 527 601      EP-A- 1 653 478
DE-A1- 10 112 316    JP-A- 2002 162 219**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention generally relates to the technical field of measuring instruments, in particular scanning microscopes such as, for example, atomic force microscopes, scanning tunnel microscopes and near-field optical microscopes, and to coordinate measuring instruments. In particular, the present invention relates to a measuring probe for a scanning microscope or a coordinate measuring machine.

In modern technology, components having dimensions of the order of magnitude of micrometers or less are employed. Examples of such components include components of micro-electro-mechanical systems (MEMS) and magnetic read/write heads for hard disks. The quality of such components may be influenced by the level of roughness of the surface of the components on length-scales on the order of magnitude of nanometers. In order to assess the quality of the components, it is desirable to perform measurements both on length scales of micrometers and on length scales of nanometers.

Scanning probe microscopy techniques such as atomic force microscopy, scanning tunnel microscopy and optical near field microscopy are able to resolve details having dimensions of the order of magnitude of nanometers. In response to the availability of increasingly robust systems, their industrial application is becoming widespread. The field of view accessible by means of techniques of scanning microscopy, however, is limited by the relatively slow scan speed of scanning microscopes according to the state of the art.

Optical far-field microscopy, on the other hand, allows fast measurements over a relatively large field of view of up to an order of magnitude of millimeters. The resolution of optical far-field microscopy, however, is limited by diffraction. Therefore, features smaller than the wavelength of light cannot be resolved by optical far-field microscopy. Therefore, it has been proposed to combine an optical microscope and a scanning microscope into a single instrument.

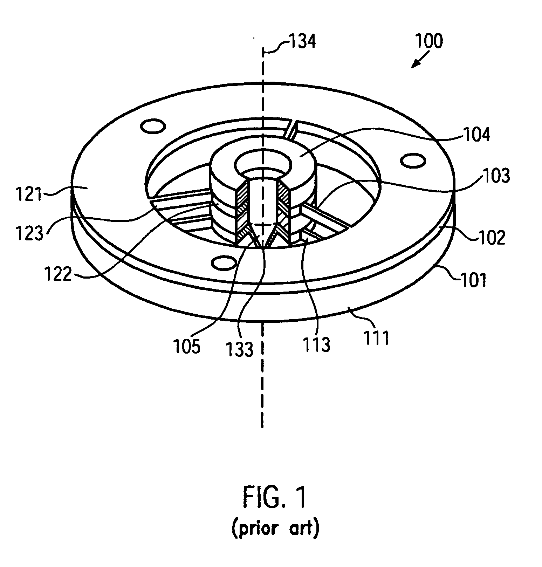

EP 1 653 478 discloses an instrument according to the state of the art wherein a surface texture measuring probe 100, which will be described in the following with reference to Fig. 1, is provided between the front lens of an optical microscope and an object to be investigated. The measuring probe 100 comprises a probe head 105 which may comprise a tip of an atomic force microscope or scanning tunneling microscope, or an aperture having a diameter smaller than the wavelength of light for optical near field microscopy.

The measuring probe 100 further comprises a first supporting body 101 that supports the probe head 105 and a second supporting body 102 coupled to the first supporting body 101.

The first supporting body 101 includes a first supporter 111 having a plurality of beams 113. The beams 113 extend from equiangular arrangement positions of the first supporter 111 towards the center and support the probe head 105 at the center of the inner space of the first supporter 111. The second supporting body 102 includes a second supporter 121 coupled to the first supporter 111. A plurality of beams 123 extend from equiangular arrangement positions of the second supporter 121 toward the center. A holder 122 is supported by the beams 123. Additionally, a balancer 104 having a mass equal to that of the probe head 105 may be provided.

A vibration element 103 is disposed between the probe head 105 and the holder 122 of the second support body 102 and is adapted to vibrate in an axial direction of an axis 134 penetrating through the center of the first and second supporting bodies.

The measuring probe 100 may be arranged in front of an objective of an optical far field microscope such that the axis 134 is aligned with the optical axis of the microscope and the measuring probe 100 is provided between the objective and the object to be investigated. Since the diameter of the probe head 105, the vibration element 103, the holder and the balancer 104 may be smaller than the entrance pupil of the microscope objective, the optical far field microscope may view the object to be investigated through the spaces between the beams 113, 123.

When the vibration element 103 is operated, the balancer 104 and the probe head 105 move relative to each other in an oscillatory manner. Thus, a distance between the probe head 105 and the object to be investigated and correspondingly, an interaction between the probe head 105 and the object to be investigated is altered periodically. The periodic alteration of the interaction between the probe head 105 and the object to be investigated may be detected using known techniques of atomic force microscopy, scanning tunneling microscopy or optical near field microscopy.

A problem of the measuring probe 100 according to the state of the art is that the beams 113, 123 are deformed to a relatively large extent during the operation of the vibration element 103. This may limit the available amplitude of the oscillation of the probe head 105.

A further problem of the measuring probe 100 according to the state of the art is that absorption of energy in the beams 113, 123 may damp the oscillation of the probe head 105. This may lead to a reduction of the Q-factor of the oscillation of the probe head, which may adversely affect the speed and precision of measurements performed by means of the measuring probe 100.

It is an object of the present invention to provide a measuring probe for a measuring instrument allowing a greater amplitude of oscillation of a measuring tip of the measuring instrument.

It is another object of the present invention to provide a measuring probe for a measuring instrument wherein a Q-factor of the oscillation of the measuring probe may be increased.

A measuring probe for a measuring instrument according to the present invention comprises a body having an elastic mode of oscillation, a measuring tip connected to the body, an actuator adapted to excite the elastic mode of oscillation of the body and at least one support element adapted for attachment of the body to another component of the measuring instrument. The at least one support element is connected to the body at one or more regions of attachment. Each of the one or more regions of attachment has a line of intersection with a plane intersecting each of the one or more regions of attachment and an extension in a direction perpendicular to the plane. The extension in the direction perpendicular to the plane is less than a length of the line of intersection. The body has a rotational axis of symmetry perpendicular to the plane and the measuring tip is lying on the rotational axis of symmetry.

Since the extension of the one or more regions of attachment in the direction perpendicular to the plane is smaller than the length of the line of intersection between each of the regions of attachment and the plane, the extension of the regions of attachment is limited to the vicinity of the plane, wherein the plane is perpendicular to the rotational axis of symmetry of the body of the measuring probe. The inventors of the present invention have found that further support of the body of the measuring probe in addition to the support provided by the at least one support element is not required to ensure the functionality of the measuring probe. Therefore, a restriction of the motion of portions of the body of the measuring probe provided at a distance to the plane and, correspondingly, a restriction of the motion of the measuring tip caused by the at least one support element may be reduced compared to the measuring probe 100 according to the state of the art or substantially avoided. Thus, the amplitude of oscillation of the measuring tip may be increased compared to the measuring probe 100 according to the state of the art.

Moreover, the plane intersecting the regions of attachment may be provided in the vicinity of a nodal plane of the elastic mode of oscillation of the body. Hence, the at least one support element may be connected to portions of the body in the vicinity of the nodal plane having a relatively small amplitude of oscillation. Thus, the damping of the elastic mode of oscillation caused by the at least one support element may be reduced and the Q-factor of the elastic mode of oscillation may be increased.

In some embodiments, each of the one or more regions of attachment is a line of attachment lying in the plane. Thus, a very small extension of the regions of attachment in the direction perpendicular to the plane may be provided, which may help to further reduce the Q-factor of the elastic mode of oscillation and to increase the amplitude of oscillation.

In some embodiments, the one or more lines of attachment lie in a nodal plane of the elastic mode of oscillation and/or not more than not more than at least one of one half of a total height of said body, one tenth of the total height of the body and one hundredth of the total height of the body away from the nodal plane of the elastic mode of oscillation

Providing the lines of attachment in the nodal plane and/or in the vicinity thereof may allow to provide a particularly small damping of the elastic mode of oscillation caused by the at least one support element, since portions of the body at the nodal plane may exhibit a very small amplitude of oscillation when the body oscillates in the elastic mode of oscillation. Other, undesirable elastic modes of oscillation of the body, however, may be damped to a greater extent, since the nodal planes of the undesirable modes of oscillations may be located at other positions than the nodal plane of the desired mode of oscillation. Hence, in the undesirable modes of oscillation, portions of the body at the lines of attachment may have a relatively large amplitude of oscillation, such that the at least one support element may exhibit damping properties. Thus, undesirable modes of oscillation may be suppressed.

In some embodiments, the measuring probe further comprises a retaining element having an opening. The retaining element has a rotational symmetry. The rotational axis of symmetry of the body is also a rotational axis of symmetry of the retaining element. The at least one support element connects the body and the retaining element. Thus, the retaining element can attached to an objective lens of an optical far-field microscope, the rotational symmetry allowing an alignment between the rotational axis of symmetry and the optical axis of the objective lens. An object to be investigated may be viewed through the retaining element. The body of the measuring probe may be located at the center of the objective lens, thus having a relatively small influence on the imaging quality of the objective lens.

In some embodiments, at least one of the retaining element and the body has a cylindrical symmetry.

In some embodiments, in the elastic mode of oscillation, amplitudes of displacement of portions of the body in the one or more regions of attachment relative to rest positions of the portions are smaller than at least one of one tenth of an amplitude of displacement of the tip relative to a rest position of the tip and one hundredth of an amplitude of displacement of the tip relative to the rest position of the tip. Thus, the at least one support element may be attached to portions of the body having a relatively small amplitude of displacement, thus allowing a reduced damping of the elastic mode of oscillation caused by the support element.

In some embodiments, the actuator is provided as a portion of the body and the support element is connected to the actuator. When the actuator is operated, portions of the body of the measuring probe located on opposite sides of the actuator may be moved relative to each other. Connecting the support element to the actuator may thus allow to reduce or substantially avoid a damping of the motion of the portions of the body located on the opposing sides of the actuator.

In some embodiments, the at least one support element comprises a damping element adapted to reduce a Q-factor of elastic modes of oscillation of the body other than the above-mentioned elastic mode of oscillation. Undesirable modes of oscillations of the body may exhibit a relatively large amplitude of displacement of portions of the body at the region or regions of attachment of the at least one support element, whereas the desired elastic mode of oscillation may have a nodal plane in the vicinity of the regions of attachment, such that portions of the body at the regions of attachment have a relatively small amplitude of displacement. Thus, the undesirable elastic modes of displacement may be damped to a greater extent than the desired elastic mode of oscillation. This may help to selectively excite the desired elastic mode of oscillation by means of the actuator.

In some embodiments, at least a portion of the at least one support element is transparent. Thus, when the measuring probe is provided in front of the objective lens of an optical far field microscope, an object to be investigated may be viewed through the transparent at least one support element.

In some embodiments, the at least one support element comprises a first portion comprising a first material and a second portion comprising a second material. A vibration loss factor of the second material is greater than a vibration loss factor of the first material and Young's modulus of the first material is greater than Young's modulus of the second material. Thus, the second portion of the at least one support element may provide a damping of undesirable elastic modes of oscillation of the body, whereas the first portion may provide a stable attachment of the body of the measuring probe to other components of the measuring instrument.

In some embodiments, the at least one support element comprises a laminate of the first material and the second material.

In other embodiments, the second portion of the support element is connected between the first portion of the support element and the body. Thus, the second portion of the support element having relatively strong damping properties may be provided in the vicinity of the body of the measuring probe. This may help to improve a damping of undesirable elastic modes of oscillation of the body.

In some embodiments, the at least one support element comprises at least one portion wherein a thickness of the at least one support element in a direction parallel to the rotational axis of symmetry increases with increasing distance from the rotational axis of symmetry. In some embodiments, the at least one support element comprises at least one portion wherein a width of the at least one support element in a direction perpendicular to the rotational axis of symmetry increases with increasing distance from the rotational axis of symmetry. When portions of the body in the vicinity of the region or regions of attachment are oscillating, elastic waves may run through the at least one support element. In case at least one of the thickness and the width of the support element is increasing with increasing distance from the rotational axis of symmetry, an amplitude of the elastic waves may decrease with increasing distance from the rotational axis of symmetry and, hence, may decrease with increasing distance from the regions of attachment. Thus, a relatively small amplitude of the elastic waves may be obtained at other portions of the measuring instrument to which the at least one support element is connected, for example at the retaining element. Thus, a reflection of elastic waves back to the body of the measuring probe, which might adversely affect the operation of the measuring probe, may be reduced or substantially avoided.

A microscope according to the present invention comprises a measuring probe as described above, an optical far field microscope and a microscope actuator. The optical far field microscope comprises an objective lens. The measuring probe is arranged between the objective lens and a focal plane of the objective lens. The rotational axis of symmetry of the body is aligned with an optical axis of the optical far field microscope. The microscope actuator is connected between the objective lens and the measuring probe for moving the measuring probe in a direction substantially parallel to the optical axis of the far field microscope.

In other to inspect an object to be investigated by means of the optical far field microscope, the microscope actuator may be operated to withdraw the measuring probe from the object to be investigated. The optical far field microscope may allow to inspect a relatively large field of view at a relatively small resolution. If it is desired to inspect a portion of the object to be investigated by means of the measuring probe, the microscope actuator may be operated to move the measuring probe towards the object to be investigated, and a portion of the object to be investigated may be scanned by means of the measuring probe for obtaining a high-resolution image of the object to be investigated. Thus, potentially interesting regions of the object to be investigated may be identified by means of the optical far filed microscope, and may then be inspected at the high resolution available by means of methods of scanning microscopy.

In some embodiments, the actuator may be adapted to exhibit a force between a first part and a second part of the body, wherein the body is adapted such that, in the elastic mode of oscillation, an amplitude of a displacement of the first part of the body relative to the second part of the body is smaller than an amplitude of a displacement of the measuring tip relative to a rest position of the measuring tip.

The modes of oscillation of an elastic body are structural features of the body. They may depend on the shape of the body. Additionally, the modes of oscillation may depend on the material or materials from which the body is formed, in particular on elastic constants and the density thereof. For a body having a specific shape and comprising specific materials, the modes of oscillation may be determined theoretically, for example by calculating substantially periodic solutions of the elastic equation of motion of the body, or may be determined experimentally, for example by resonant excitation of the elastic modes of oscillation. To excite an elastic mode of oscillation of the body, an alternating current having a predetermined frequency may be supplied to the actuator element, and an amplitude of a displacement of a portion of the body may be measured in response thereto. If the frequency of the alternating current corresponds to the frequency of an elastic mode of oscillation of the body, a peak of the amplitude of displacement may be observed.

The elastic mode of oscillation of the measurement probe may be excited by operating the actuator element, and a vibration of the tip having an amplitude of oscillation which is greater than the amplitude of oscillation provided by the actuator element can be obtained. Correspondingly, a force which is exhibited on the tip by the measuring probe may be smaller than the force exhibited by the actuator element on the measuring probe. Hence, the measuring probe may act as a mechanical analogue of a transformer, wherein a relatively large force and a relatively small amplitude of oscillation at the location of the actuator element are transformed to a relatively small force and a relatively large amplitude of oscillation at the location of the tip. Thus, an amplitude of oscillation of the tip may be increased compared to measurement probes according to the state of the art.

In the measuring probe according to the present invention, a piezoelectric actuator element comprising a hard piezoelectric material having a moderately high piezoelectric coupling may be used, since the relatively large force and relatively small amplitude of oscillation provided by such piezoelectric materials can be transformed to the relatively large amplitude of oscillation and relatively small force which may be desirable for scanning microscopy applications.

Interferometric measurements of the height of the tip can be performed by means of light reflected at portions of the measurement probe having a relatively small amplitude of displacement in the elastic mode of oscillation of the measuring probe, such that an adverse influence of the vibration of the measurement probe on the precision of the interferometric measurements may be reduced.

Furthermore, an influence of Brown's motion on the motion of the measurement tip may be reduced, since an amplification of Brownian lattice motions in the body may be substantially avoided or at least reduced.

In some embodiments, the body may comprise a stylus and a first countermass. The tip can be provided at a first end of the stylus and the actuator element is provided between a second end of the stylus and the first countermass.

A portion of the stylus in the vicinity of the actuator element may provide an elasticity which allows an elastic oscillation of the tip and a portion of the stylus adjacent the tip relative to the countermass. Thus, the elasticity of the measuring probe may be provided by the stylus. The stylus can be a monolithic unit, which may help to improve the stability of the elastic mode of oscillation of the measuring probe. Compared to known scanning microscopes wherein a measuring tip is provided at an end of a sideways cantilever, providing the stylus and the countermass may help to reduce an adverse influence of Brownian motion on the scanning microscopy, since an amplification of Brownian motion, which may be caused by a sideways cantilever, may be substantially avoided or at least reduced.

In some embodiments, the stylus may be detachably connected to the actuator element and the first countermass. Thus, the stylus and the tip may be exchanged in a convenient manner in case of a deterioration of the tip.

In some embodiments, the first countermass may comprise a mirror portion for optical measurement of a position of the first countermass. Thus, a position of the measuring probe may be determined by means of interferometric measurements.

In some embodiments, the elastic mode of oscillation may comprise a longitudinal oscillation of the stylus. This allows a substantially rotationally symmetric configuration of the measuring probe, which may facilitate an arrangement of the measuring probe in front of the entrance pupil of an optical far field microscope. Additionally, a longitudinal vibration of the tip may allow a relatively high resonance frequency in combination with a moderate Q-factor of the elastic mode of oscillation, which may allow to scan the surface of the object to be investigated at a relatively high scanning speed.

In some embodiments, the measuring probe may further comprise a second countermass. The second countermass can be provided between the second end of the stylus and the actuator element. In the elastic mode of oscillation, the first countermass and the tip may oscillate in the same direction, and the second countermass may oscillate in the opposite direction, wherein an amplitude of a displacement of the second countermass may be smaller than an amplitude of the displacement of the first countermass and an amplitude of the displacement of the tip. Hence, the second countermass may provide a point of attachment for the at least one support element connecting the measuring probe to other portions of a scanning microscope.

In some embodiments, at least one of a mass of the first countermass, a mass of the second countermass and a sum of the mass of the second countermass and the mass of the first countermass can be greater than a mass of the stylus. Thus, an amplitude of a displacement of the first mass and/or the second mass may be smaller than an amplitude of the displacement of the tip. Additionally or alternatively, in some embodiments, the mass of the first countermass can be greater than the mass of the second countermass. These relationships between the masses of the components allow to provide a relatively large amplitude of oscillation of the measuring tip and a relatively small amplitude of oscillation of the first and/or the second countermass.

In some embodiments, the second end of the stylus can be fixed to the second countermass and the actuator element may connect the second countermass to the first countermass. Thus, the portion of the stylus adjacent the second end may provide a first elastic element, and the actuator element and/or a portion of the second countermass adjacent the actuator may provide a second elastic element. This arrangement may allow to provide a particularly efficient mechanical coupling between the actuator element and the elastic mode of oscillation of the measuring probe.

In some embodiments wherein the body comprises a stylus, a first countermass and a second countermass, wherein the tip is provided at a first end of a stylus and a second end of the stylus is connected to the second countermass, the actuator element may connect the first countermass to the second countermass and the at least one support element may be attached to the second countermass. Since, in the desired elastic mode of oscillation of the body, an amplitude of the displacement of the second countermass may be relatively low, a damping of the desired elastic mode of oscillation of the body may be reduced. This may help to provide a moderately large Q-factor of the desired mode of oscillation while reducing the Q-factor of undesirable modes of oscillation.

In some embodiments, the actuator element may comprise a piezoelectric material, a first electrode, a second electrode and a power source adapted to apply a voltage of operation being smaller than a maximum voltage of operation between the first and the second electrode. The piezoelectric material is provided between the first and the second electrode. The piezoelectric material has a coercitive field greater than an electric field strength occurring in the piezoelectric material if the maximum voltage of operation is applied between the first electrode and the second electrode, greater than two times the electric field strength and/or greater than ten times the electric field strength.

Thus, a swapping of the polarization of piezoelectric domains in the piezoelectric material under typical conditions of operation of the measuring probe may substantially be avoided. This may help to reduce a mechanical damping caused by the piezoelectric material, thus enabling a relatively high mechanical Q-factor of the elastic mode of oscillation of the body. Moreover, electrical noise caused by the swapping of the polarization of the piezoelectric domains may be reduced, which may allow simultaneously using the actuator for actuation and sensing. Hence, the measuring probe may be operated in a self-sensing mode, which may help to provide a cost-efficient design of the measuring probe due to its simplicity.

In some embodiments, the actuator may comprise a piezoelectric material having a coercitive filed of about 10 kV/cm or more. In some embodiments, the actuator element may comprise and/or consist of a piezo-electric washer. The elastic mode of oscillation of the body of the measuring probe according to the present invention may transform oscillations provided by the piezoelectric washer to oscillations having an amplitude which is desirable for scanning microscopy. Hence, the present invention may allow the use of a piezoelectric washer in a measuring probe of a scanning microscope.

In a method of operating a measuring probe according to the present invention, wherein the measuring instrument comprises a measuring probe as described above and wherein the actuator element comprises or consists of a piezoelectric actuator element having a first and a second electrical connection, a sensor output signal may be created on the basis of a current flow through the first and the second electrode of the piezoelectric actuator element. Simultaneously, an alternating voltage may be applied between the first electrode and the second electrode.

By applying the alternating voltage between the electrodes, the elastic mode of oscillation can be excited. Thus, the measurement probe according to the present invention may be used in a self-sensing mode, wherein the piezoelectric element is used both for actuation and for creating the sensor signal simultaneously. Hence, the complexity of the measuring probe and the number of electrical connections to the measuring probe may be reduced.

Embodiments of the present invention will be described with reference to the enclosed figures, wherein

Fig. 1 shows a schematic perspective view of a measuring probe in a scanning microscope according to the state of the art;

Fig. 2a shows a schematic cross-sectional view of a microscope comprising a measuring probe according to the present invention;

Fig. 2b shows an enlarged cross-sectional view of a portion of the microscope shown in Fig. 2a;

Fig. 3a shows a schematic cross-sectional view of a measuring probe according to an embodiment of the present invention;

Fig. 3b shows a schematic top view of the measuring probe shown in Fig. 3a

Fig. 3c shows an equivalent diagram of the measuring probe shown in Figs. 3a and 3b;

Fig. 3d shows a diagram illustrating oscillations of the measuring probe shown in Figs. 3a and 3b;

Fig. 3e shows a schematic top view of a measuring probe according to another embodiment of the present invention;

Fig. 4a shows a schematic cross-sectional view of a measuring probe according to a further embodiment of the present invention;

Fig. 4b shows a schematic explosive view of the measuring probe shown in Fig. 4a;

Fig. 4c shows an equivalent diagram of the measuring probe shown in Figs. 4a and 4b;

Fig. 4d shows a diagram illustrating oscillations of the measuring probe shown in Figs. 4a and 4b;

Fig. 5 shows a schematic cross-sectional view of a measuring probe according to yet another embodiment of the present invention; and

Fig. 6 shows a schematic cross-sectional view of a measuring probe according to yet another embodiment of the present invention.

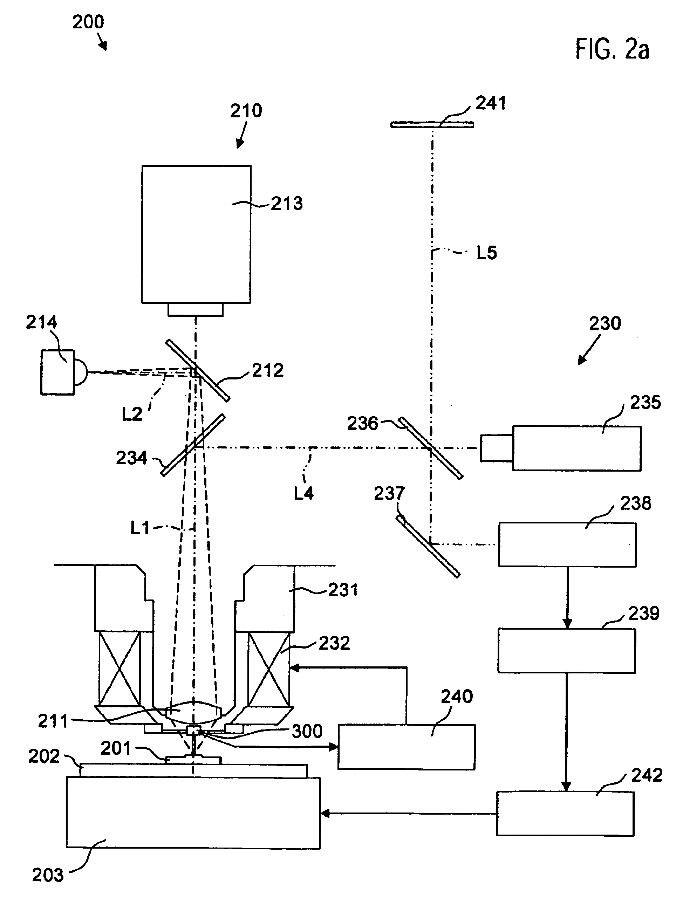

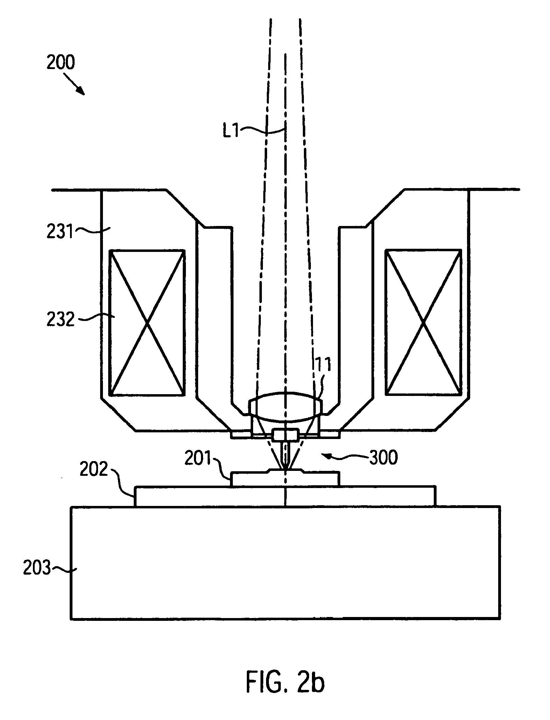

Fig. 2a shows a schematic cross-sectional view of a microscope 200 comprising a measuring probe 300 according to the present invention. The measuring probe 300 may be employed for measurements using techniques of scanning microscopy. Additionally, the microscope 200 may allow an investigation of an object by means of techniques of optical far field microscopy, as will be explained in more detail below. An enlarged cross-sectional view of a portion of the microscope 200 is shown in Fig. 2b.

The microscope 200 comprises a table 202 on which an object 201 which is to be investigated by the microscope 200, for example a workpiece, can be mounted. The microscope 200 further comprises a relative movement unit 203 which is configured to move the table 202.

In some embodiments, the relative movement unit 203 can be configured to move the table 202 in two substantially orthogonal horizontal directions and a vertical direction substantially orthogonal to the horizontal directions. Thus, three-dimensional motions of the table 202 and the object 201 provided thereon can be performed.

Additionally, the microscope 200 may comprise an optical observation unit 210 comprising an objective lens 211, a partially transmissive mirror 212 arranged at an optical axis L1 of the objective lens 211, and an image acquisition unit 213. In some embodiments, the image acquisition unit 213 may comprise a camera, for example a CCD camera of a type known to persons skilled in the art, or a camera comprising a photographic film. In other embodiments, an ocular may be provided instead of the camera 213 for visual inspection of the object 201.

The optical observation unit 210 may further comprise a light source 214 arranged on an optical axis L2, which can be substantially orthogonal to the optical axis L1. Light emitted by the light source 214 can be directed along the optical axis L2 towards the partially transmissive mirror 212. The arrangement of the light source 214, the partially transmissive mirror 212 and the objective lens 211 can be adapted such that a portion of the object 201 is illuminated by light from the light source 214 through the objective lens 211. The objective lens 211 may provide an image of the object 201 to the image acquisition unit 213. Thus, an optical far field image of the object 201 may be obtained.

The microscope 200 may further comprise a holder 231, wherein the objective lens 211 is connected to the holder 231. Additionally, the measuring probe 300 may be connected to the holder 231, as will be described in more detail below. A microscope actuator 232, which may, for example, comprise a piezoelectric actuator may be adapted to move the measuring probe 300 in the vertical direction relative to the objective lens 211.

In order to observe the object 201 by means of the optical observation unit 210, the microscope actuator 232 may be operated to move the measuring probe 300 towards the objective lens 211. Thus, light reflected at a portion of the object 201 in the vicinity of the optical axis L1 of the objective lens 211 may impinge on the objective lens 211, and the portion of the object 201 may be imaged on the image acquisition unit 213. For investigating the object 201 by means of scanning microscopy, the microscope actuator 232 may be operated to move the measuring probe 300 towards the object 201.

Additionally, the microscope 200 may comprise an interferometer 230 for measuring a position of a portion of the measuring probe 300 along the vertical direction. The interferometer 230 may comprise a light source 235 adapted to emit light along an optical axis L4, which can be substantially perpendicular to the optical axis L1 of the objective lens, and a partially transmissive mirror 234 adapted to reflect a portion of the light emitted by the light source 235 into a direction along the optical axis L1. In some embodiments, the light source 235 may comprise a laser of a type known to persons skilled in the art, for example a semiconductor laser or a gas laser.

The interferometer 230 may further comprise a partially transmissive mirror 236 which is arranged on the optical axis L4 between the light source 235 and the partially transmissive mirror 234. A portion of the light emitted by the light source 235 may be reflected by the partially transmissive mirror 236 along an optical axis L5 which can be substantially perpendicular to the optical axis L4. A mirror 241 may be provided along the optical axis L5, and can be arranged such that light propagating along the optical axis L5 is reflected back towards the partially transmissive mirror 236.

A portion of the light reflected by the mirror 241 may be transmitted through the partially transmissive mirror 236, and may be reflected to a light detector 238 by a further mirror 237. The light detector 238 may comprise a photodiode or a photomultiplier, or any other type of light detector known to persons skilled in the art.

The portion of the light from the light source 235 which is transmitted through the partially reflective mirror 236 and reflected by the partially transmissive mirror 234 may impinge on a portion of the measuring probe 300 after transmission through the objective lens 211 and may be reflected therefrom, as will be explained in more detail below. The light reflected from the measuring probe 300 may propagate back along the axis L1 and may, after reflection at the partially transmissive mirrors 234, 236 and the mirror 237, be directed towards the light detector 238.

The portion of the light from the light source 235 reflected at the measuring probe 300 and the portion of the light from the light source 235 reflected at the mirror 241 may interfere with each other. A phase difference between the portions of the light may depend on the position of the portion of the measuring probe 300 at which the light is reflected. Hence, depending on the position of the portion of the measuring probe 300 at which the light is reflected, the portions of the light may interfere constructively, such that a relatively high light intensity is obtained at the light detector 238, or may interfere destructively, such that a relatively low light intensity is obtained at the light detector 238. Thus, the light intensity measured by the light detector 238 may be representative of the position of the measuring probe 300.

The microscope 200 may further comprise a demodulator 239 for demodulating an output signal from the light detector 239 and for generating a signal representative of the position of the measuring probe 300, and a drive controller 242 receiving an output signal from the demodulator

The drive controller 242 may be adapted to control the operation of the relative movement unit 203. Thus, the object 201 may be moved relative to the measuring probe 300 for scanning the surface of the object 201 by means of the measuring probe 300 and for focusing the optical far field microscope 210. Additionally, the microscope 200 may comprise a controller 240 configured to control the microscope actuator 232 in accordance with a signal from the measuring probe 300. Thus, the surface of the object 201 may be scanned by means of the measuring probe 300 using techniques of scanning microscopy, as will be explained in more detail below.

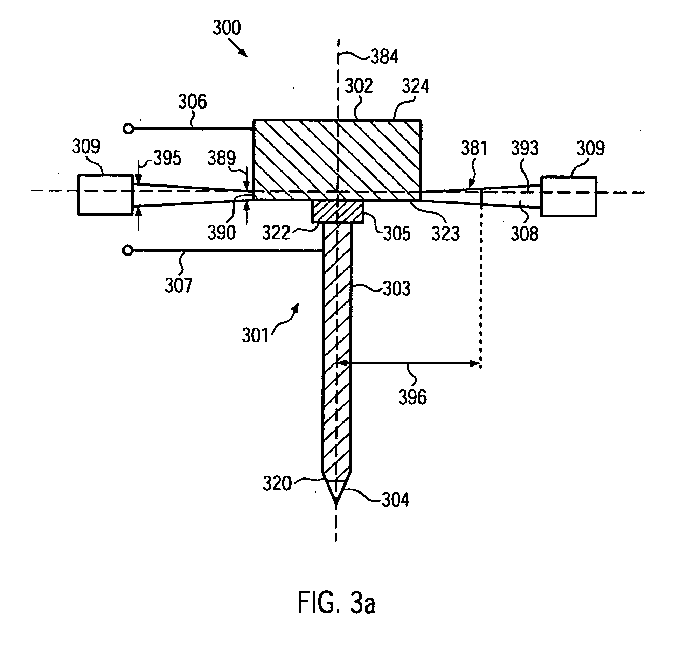

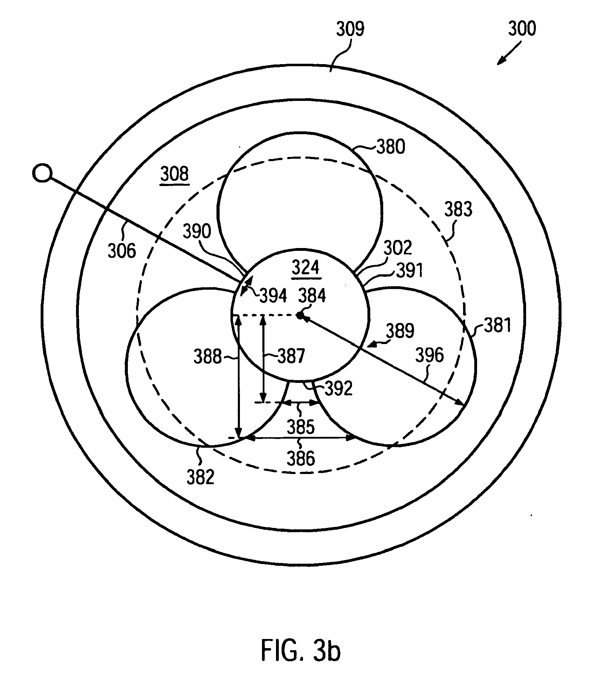

Fig. 3a shows a schematic cross-sectional view of the measuring probe 300 according to an embodiment of the present invention. A schematic top view of the measuring probe 300 is shown in Fig. 3b.

The measuring probe 300 comprises a body 301. The body 301 comprises a stylus 303 and a countermass 302. In some embodiments, the stylus 303 may have the shape of a solid cylinder. A measuring tip 304 is provided at a first end 320 of the stylus 303. A actuator element 305 is provided between a second end 322 of the stylus 303 and a bottom surface 323 of the countermass 302. The measuring probe 300 may further comprise a support element 308 for connecting the measuring probe 300 to other portions of the microscope 200, for example to a retaining ring 309 connected to the holder 231. In some embodiments, the stylus 303 can be manufactured from a piece of wire.

The body 301 of the measuring probe 300 may have a rotational symmetry. In some embodiments, the stylus 303 and the countermass 302 may have a cylindrical shape, such that the body 301 has a cylindrical symmetry. The actuator 305, which may also be regarded as part of the body 301 may also have a cylindrical shape. In Figs. 3a and 3b, reference numeral 384 denotes a rotational axis of symmetry of the body 301.

The present invention is not restricted to embodiments wherein the body 301 has a cylindrical symmetry. In other embodiments, the body 301 may have a rotational symmetry of order n, wherein n is a natural number not less than two. For example, in some embodiments, the countermass 302 and the stylus 303 may have a quadratic cross-section, thus having a rotational symmetry of order four, or they may have a hexagonal cross-section, thus having a six-fold rotational symmetry.

In still further embodiments, the stylus 303 may have a substantially cylindrical shape, and the countermass 302 may have a prismoidal shape. In some of these embodiments, the countermass may have a quadratic cross-section such that the body 301 has a rotational symmetry of order four or a hexagonal cross-section such that the body 301 has a rotational symmetry of order six.

Irrespective of the order of the rotational symmetry, the rotational axis of symmetry 384 may run through the center of the stylus 303 and the tip 304, such that the tip 304 is lying on the rotational axis of symmetry 384.

In the embodiment shown in Figs. 3a and 3b, the support element 308 has the shape of a disk, wherein an outer circumference of the support element 308 is connected to the retaining ring 309. The support element 308 comprises openings 380, 381, 382 having a substantially circular shape. Additionally, the support element 308 comprises a center opening 389 having a shape substantially equal to a cross-section of the countermass 302 such that the countermass 302 may be inserted into the center cutout 389. The center opening 389 may have a center point lying on the rotational axis of symmetry 384 of the body 301. The openings 380, 381, 382 may overlap with the center opening 389, and may be excentric with respect to the support element 308.

Edges of the center opening 389 may be connected to the countermass 302 at regions of attachment 390, 391, 392 where the support element 308 abuts the countermass 302. The connection between the edges of the center opening 389 of the support element 308 and the countermass 308 may be effected by means of known techniques such as, for example, gluing or a tight pressing fit. In other embodiments, the center opening 389 of the support element 308 may have a slightly smaller diameter than the countermass 302, and the countermass 302 may comprise a groove circumferentially surrounding the countermass 302 into which the edges of the center opening 389 can be inserted.

The support element 308 may be aligned with a plane 393 which is perpendicular to the rotational axis of symmetry 384 of the body 301 and which intersects each of the regions of attachment 390, 391, 392 at a line of intersection lying within the plane 393.

In Fig. 3b, reference numeral 394 denotes a length of the line of intersection between the plane 393 and the region of attachment 390. An extension of the region of attachment 390 in a direction perpendicular to the plane 393 and parallel to the rotational axis of symmetry 384 may be substantially equal to the thickness of a portion of the support element 308 adjacent the region of attachment 390, which is denoted by reference numeral 389 in Fig. 3a.

The length 394 of the line of intersection may be greater than the thickness of the portion of the support element 308 adjacent the region of attachment 390 such that the extension of the region of attachment in a direction perpendicular to the plane 293 is smaller than the length 394 of the line of intersection.

In some embodiments of the present invention, the thickness 389 of the portion of the support element 308 adjacent the region of attachment 390 may be small compared to the length 394 of the line of intersection. Thus, the region of attachment 390 is a line of attachment lying in the plane 393. In some embodiment, the thickness 389 may be in the range between one half of the length 394 of the line of intersection and one tenth of the length 394 of the line of intersection. In further embodiments, the thickness 389 may be less than one half of the length 394 of the line of intersection, less than one tenth of the length 394 of the line of intersection and/or less than one hundredth of the length 394 of the line of intersection..

The regions of attachment 391, 392 may have a shape substantially equal to that of the region of attachment 390.

The retaining ring 309 may have a rotational symmetry, wherein the rotational axis of symmetry 384 of the body 301 is also a rotational axis of symmetry of the retaining ring 309. Thus, the body 301 and the tip 304 are provided at a center of the retaining ring 309. In some embodiments, the retaining ring 309 may have a cylindrical symmetry, as shown in Fig. 3b. In other embodiments, the retaining ring 309 may have a rotational symmetry of order n, wherein n is a natural number not less than two. In some embodiments, the retaining ring 309 may have a square shape, thus having a four-fold rotational symmetry, or a hexagonal shape, thus having a six-fold rotational symmetry.

The order of the symmetry of the retaining ring 309 and the body 301 need not be equal. For example, in one embodiment, the retaining ring may be substantially circular, thus having a cylindrical symmetry, the countermass 302 may have a substantially hexagonal cross-section and the stylus 303 may be substantially cylindrical such that the body 302 has a six-fold rotational symmetry.

In some embodiments, the thickness of the support element 308 may increase with increasing distance from the rotational axis of symmetry 384, wherein the thickness of the support element 308 may be measured in a direction perpendicular to that of the plane 393 and parallel to the rotational axis of symmetry 384. In Fig. 3a, reference numeral 389 denotes a thickness of a portion of the support element 308 adjacent the regions of attachment 390, 391, 392, and reference numeral 395 denotes a thickness of a portion of the support element 308 adjacent the retaining ring 309, wherein the thickness 389 is smaller than the thickness 395.

Portions of the support element 308 between the openings 380, 381, 382 may have a width which increases with increasing distance from the rotational axis of symmetry 384, wherein the width can be measured in a circumferential direction which is perpendicular to the rotational axis of symmetry 384. As shown in Fig. 3b, a portion of the support element 308 between the openings 381, 382 located at a distance denoted by reference numeral 387 from the rotational axis of symmetry 384 may have a width denoted by reference numeral 385, and a portion of the support element 308 between the openings 381, 382 located at a distance denoted by reference numeral 388 from the rotational axis of symmetry 384 may have a width denoted by reference numeral 386, wherein the distance 388 is greater than the distance 387 and the width 386 is greater than the width 385. Other portions of the support element 308 between the openings 380, 381, 382 may have a similar shape.

In Fig. 3b, a circle 383 denotes a diameter of a beam of light originating at a point located on the optical axis L1 of the objective lens 211 at such a distance to the objective lens 211 that a sharp image of the point is formed at the image acquisition unit and entering the entrance pupil of the objective lens 211 in the absence of the measuring probe 300. A distance 396 of portions of the openings 380, 381, 382 distal the rotational axis of symmetry 384 may be greater than the diameter 383 of the beam of light. Thus, a relatively large portion of the beam of light may pass through the openings 380, 381, 382 if the measuring probe 300 is provided between the objective lens 211 and the object 201. This may help to substantially avoid or at least reduce a deterioration of the image quality caused by the presence of the measuring probe 300 between the objective lens 211 and the object 201.

In some embodiments, the support element 308 may comprise a transparent material such as glass or a transparent plastic material such as acrylic glass. Thus, the object 201 may be viewed through the support element 308. In such embodiments, the openings 380, 381, 382 may be omitted, and the measuring probe 300 may comprise a single region of attachment provided in form of a line of attachment running circumferentially around the countermass 302.

The present invention is not restricted to embodiments wherein the thickness of the support element 308 increases with increasing distance from the rotational axis of symmetry 384. In other embodiments, the support element 308 may comprise a substantially planar top surface and a substantially planar bottom surface. In embodiments wherein at least a portion of the support element 308 is transparent, the transparent portion of the support element 308 may be substantially plane-parallel to avoid an alteration of the focal length of the objective lens 211 caused by refraction of light at the support element 308. In embodiments wherein the support element 308 is opaque, a substantially plane-parallel support element 308 may simplify the manufacturing of the support element 308.

As already mentioned above, the support element 308 may be attached to the countermass 302. In some embodiments, the support element 308 may be attached to a portion of a side surface of the countermass 302 adjacent an edge between the side surface and the bottom surface 323 of the countermass 302.

The support element 308 may comprise an elastic material such that the countermass 302 may move relative to the retaining ring 309. Additionally, the material of the support element 308 may have damping properties. In some embodiments, the support element 308 may comprise a thermoplastic material, for example polyvinyle chloride (PVC) or polyethylene (PE). In other embodiments, the support element 308 may comprise a thermosetting material, for example a resin. As persons skilled in the art know, thermoplastic materials may have stronger damping properties than thermosetting materials. As persons skilled in the art know, stronger damping properties may reflect in a higher vibration damping loss factor of a material.

The present invention is not restricted to embodiments wherein the entire support element 308 is formed from a single material. In other embodiments, the support element 308 may comprise a first portion comprising a first material and a second portion comprising a second material.

The second material may have a relatively high vibration damping loss factor. In some embodiments, the second material can comprise a relatively soft material such as, for example, rubber or silicone. The first material may have a relatively high Young's modulus. In some embodiments, the first material may, for example, comprise glass and/or aluminum. The vibration damping loss factor of the second material may be greater than the vibration damping loss factor of the first material and Young's modulus of the first material may be greater than Young's modulus of the second material. Hence, the portion of the support element 308 comprising the first material may provide damping of elastic vibrations by the support element 308, and the portion of the support element 308 comprising the second material may provide mechanical rigidity of the support element 308

As persons skilled in the art know, material properties of a viscoelastic material related to the propagation of vibrations may be characterized by a complex modulus of elasticity, wherein Young's modulus is the real part of the complex modulus of elasticity and the loss factor is the ratio between the imaginary part and the real part of the complex modulus of elasticity. The vibration damping loss factor is an indicator of the damping provided by the material. Methods of measuring the complex modulus of elasticity of a material are known to persons skilled in the art.

The complex modulus may depend on the frequency of the vibration. The relations between the vibration damping loss factors and Young's moduli of the first and the second material described above may, in particular, be fulfilled at the frequency of the desired elastic mode of oscillation of the body 301 of the measuring probe 300.

In some embodiments, the support element 308 may comprise a laminate of the first material and the second material, wherein a layer of the first material and a layer of the second material provided on top of each other are connected with each other, for example by means of gluing and/or welding.

In other embodiments, the second portion of the support element 308 may be connected between the first portion of the support element 308 and the body 301. For example, in one embodiment, the first portion of the support element 308 may comprise a disk of a transparent material, for example glass, which has a relatively low vibration damping loss factor and a relatively high modulus of elasticity. The first portion may have a central opening having diameter being greater than the diameter of the countermass 302. The second portion of the support element 308 may comprise an elastic material having a relatively high vibration damping loss factor, for example rubber or silicone, and may be inserted between the edge of the central opening of the first portion of the support element 308 and the countermass 302. Thus, vibrations may be absorbed in the second portion of the support element, and a transfer of vibrational energy between the body 301 of the measuring probe 300 and the first portion of the support element 308 may be reduced or substantially avoided.

In some embodiments, the actuator element 305 can comprise a piezoelectric element connecting the second end 322 of the stylus 303 to the bottom surface 232 of the countermass 302. The stylus 303 and the countermass 302 may be formed from an electrically conductive material, for example a metal such as aluminium, brass, Ni36, stainless steel or similar. A first electrical connection 307 which may, for example, be provided in form of a wire which is soldered or welded to the stylus 303 may provide an electrical connection to the stylus 303. A second electrical connection 306 which may, for example, comprise a wire welded or soldered to the countermass, may provide an electrical connection to the countermass 302.

The first electrical connection 307 and the second electrical connection 306 may be connected to a power source adapted to apply a voltage between the first electrical connection 307 and the second electrical connection 306. Thus, an electric voltage may be applied between the second end 322 of the stylus 303 and the bottom surface 323 of the countermass. The electric voltage may create an electric field in the piezoelectric element of the actuator element 305, such that the actuator element 305 exhibits a force between the second end 322 of the stylus 303 and the bottom surface 323 of the countermass 302.

In one embodiment, the piezoelectric element of the actuator element 305 may comprise a hard piezoelectric material. Hard piezoelectric materials may have a coercive field being significantly greater than an electric field strength occurring in the piezoelectric material during the operation of the actuator element 305, such that piezo-electric domains in the piezoelectric material do not significantly change their grade of polarization in the range of the mechanic and electric operation conditions of the actuator element 305.

In some embodiments, when simple and cost-efficient operation of the measuring probe 300 is intended, the actuator element 305 may be used for excitation of the mechanical vibration by connecting it to an alternating voltage source using the electrical wires 306 and 307, and may simultaneously be used for sensing the mechanical vibration by measuring the current flow through one of the wires 306 or 307. In some embodiments, an electrical representative of the mechanical vibration, with well scaled amplitude and matching phase, may be computed from the current signal. Thus, the measuring probe 300 may be operated in a self-sensing mode.

In some embodiments, the piezoelectric material may comprise lead zirconate titanate (PZT). Lead zirconate titanate is a piezoelectric material well known to persons skilled in the art. As persons skilled in the art know, lead zirconate titanate may have very high piezoelectric coupling factors, and in addition, hard lead zirconate titanate may have a high immunity of the grade of piezo-electric polarization against mechanical stresses and electrical fields.

In some embodiments, the piezoelectric material may have a coercive field strength greater than about 10 kV/cm.

The present invention is not restricted to embodiments wherein the actuator element 305 comprises a piezoelectric element. In other embodiments, the actuator element 305 may comprise an electro-magnetic transducer. In one such embodiment, the countermass 302 may comprise a ferromagnetic material, for example iron, and the stylus 303 may comprise a nonferromagnetic material, for example aluminum. Alternatively, the stylus 303 may comprise a ferromagnetic material and the countermass 302 may comprise a nonferromagnetic material. The actuator element 305 may further comprise a coil arranged such that a magnetic field created by an electric current flowing through the coil may interact with the ferromagnetic countermass 302 or the ferromagnetic stylus 303, respectively. In one embodiment, the coil may be attached to a portion of the holder 231. If an electric current is flown through the coil, the magnetic field may interact with the ferromagnetic material, such that a force is exhibited on one of the countermass 302 and the stylus 303. A significantly lower force, or substantially no force at all, is exhibited by the magnetic field to the other of the countermass 302 and the stylus 303. Thus, a force is exhibited between the countermass 302 and the stylus 303. A strength of the force may be controlled by varying the amperage of the current flowing through the coil.

The tip 304 may be adapted for scanning the surface of the object 201 by means of techniques of scanning microscopy such as scanning force microscopy, scanning tunneling microscopy or optical near field microscopy. The configuration of the tip 304 may be adapted to the desired type of scanning microscopy. In one embodiment wherein the measuring probe 304 is adapted for scanning force microscopy, the tip 304 may comprise a diamond tip which is glued to the first end 320 of the stylus 303. In other embodiments, the tip 304 may comprise a tip of a different type.

If the actuator element 305 is operated to exhibit a force between the second end 322 of the stylus 303 and the bottom surface of the countermass 302, inertial forces of portions of the body 301 and/or elastic forces in portions of the body 301 may create a counterforce. The inertial forces and the elastic forces may lead to an elastic oscillation of the body 301, wherein a frequency of the oscillation as well as a displacement of portions of the body 301 by the oscillation may be determined by the shape of and mass distribution in the measuring probe 300, as well as by the elastic properties of the material or materials of the body 301.

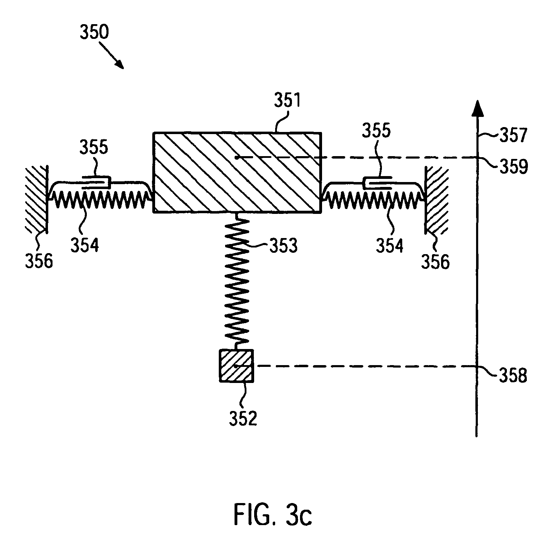

The oscillation of the measuring probe will be described in more detail with reference to Fig. 3c, which shows a schematic equivalent diagram 350 of the measuring probe 300 shown in Figs. 3a and 3b. The equivalent diagram 350 is illustrative for elastic modes of oscillation of the measuring probe 300.

In Fig. 3c, reference numeral 351 denotes a first mass, which is representative of inertial forces occurring due to the motion of the countermass 302. Reference numeral 352 denotes a second mass, which is coupled to the first mass 351 by a spring 353. The second mass 352 is representative of inertial forces occurring due to the motion of the stylus 303 or portions thereof, and the spring 353 is representative of an elasticity of the stylus 303. Due to the elasticity of the stylus 303, the stylus 303 may oscillate in a longitudinal direction of the stylus, such that a distance between the first end 320 and the second end 322 is varied in a periodic manner. A spring constant of the spring 353 and the second mass 352 may represent elastic forces and inertial forces, respectively, occurring in the stylus 303 during the oscillation of the stylus 303.

As persons skilled in the art will appreciate, the first mass 351 and the second mass 352 are equivalent masses representative of inertial forces occurring in the measuring probe 300. In particular, the second mass 352 may be smaller than the actual mass of the stylus 303, since portions of the stylus 303 in the vicinity of the second end 322 may move at a lower speed than portions of the stylus 303 in the vicinity of the tip 320, thus exhibiting smaller inertial forces than the portions of the stylus 303 in the vicinity of the tip 320. Therefore, the portions of the stylus 303 in the vicinity of the second end 322 may enter into the second mass 352 with a weighting factor smaller than one.

For the purposes of the equivalent diagram 350, the first mass 351 may be set substantially equal to the mass of the countermass 302, since the elastic deformation of the countermass 302 may be small compared to the elastic deformation of the stylus 303.

An elasticity of the support element 308 may be represented by springs 354, and damping properties of the support element 308 may be represented by dampers 355. Since the retaining ring 309 may be connected to the holder 231 of the microscope 231, the mass of which may be much greater than the mass of the measuring probe 300, in the equivalent diagram 350, the retaining ring 309 may be represented by a rigid wall 356 which does not allow a motion of ends of the spring 354 and the damper 355 connected to the rigid wall 356 relative to the rigid wall 356.

Furthermore, in the equivalent diagram of Fig. 3b, the first mass 351 and the second mass 352 may be regarded as point masses, the springs 353, 354 may be regarded as ideal springs, and the damper 355 may be regarded as an ideal damper providing a decelerating force which is proportional to a velocity of the first mass 351.

As persons skilled in the art will understand, the equivalent diagram 350 may provide a simplification of features of the measuring probe 300. Nevertheless, the equivalent diagram may be useful for understanding elastic oscillations of the measuring probe 300.

In Fig. 3b, reference numeral 357 denotes a coordinate axis denoting positions of the first mass 351 and the second mass 352 in the longitudinal direction of the stylus 303, and reference numerals 359 and 358, respectively, denote the positions of the first mass 351 and the second mass 352, respectively.

If one or both of the first mass 351 and the second mass 352 is moved away from its rest position, the spring 353 and, optionally, the spring 354 will exhibit a force on the first mass 351 and the second mass 352. A direction of the force will be such that the masses 351, 352 are drawn back towards their rest positions. The force accelerates the masses 351, 352, such that the masses 351, 352 obtain a velocity and move beyond their rest position, until the springs 353, 354 force them back. Thus, an oscillatory motion of the masses 351, 352 is obtained. The dampers 355 may damp the oscillatory motion of the masses 351, 352 such that an amplitude of the oscillatory motion of the masses 351, 352 is reduced in the course of time.

Similarly, in the measuring probe 300, the measuring tip 304 of the stylus 303 and the countermass 302 may oscillate relative to each other, the damping properties of the support element 308 leading to a decay of the amplitude of oscillation. The stylus 303 may also have damping properties. Since the damping provided by the stylus 303 may be weak compared to the damping provided by the support element 308, for purposes of the equivalent diagram 350, the damping provided by the stylus 303 may be neglected. The damping provided by the support element 308 and/or the stylus 303 may be characterized by the Q-factor of the elastic oscillation of the measuring probe 300. As persons skilled in the art know, the Q-factor of a damped mechanical or electrical oscillator is representative of a ratio between the vibration amplitude and the loss of vibration amplitude per cycle.

In the operation of the measuring probe 300, the damping provided by the supporting element 308 as well as the damping provided by the stylus 303 may be compensated by an activation of the actuator element 305 in a quasi-stationary condition. To this end, an alternating voltage signal having a frequency being substantially equal to the frequency of the elastic mode of oscillation of the body of the measuring probe 300 may be supplied to the actuator element 305. In some embodiments, the alternating voltage signal can be created by means of an external function generator.

In some embodiments, the mass of the countermass 302 may be large compared to the mass of the stylus 303 and the mass of the stylus 303 may be large compared to the mass of the tip 304. In such embodiments, the frequency of oscillation of the body of the measuring probe 300 may approximately be calculated in accordance with the following equation:

$$f = \sqrt{E/\rho}\,/4l$$

wherein f is the frequency of oscillation, $\rho$ and E, respectively, are the specific density and Young's modulus, respectively, of the material of the stylus 303, and I is the length of the stylus 303. In this equation, the stylus 303 is approximated by a cylindrical rod which is fixed at one end to the actuator 305 and the countermass 302, motions of which are neglected, and the influence of the tip 304 on the oscillation of the stylus 303 is also neglected. In other embodiments, the frequency of oscillation of the body of the measuring probe 303 may be calculated by means of finite element methods known to persons skilled in the art. In still further embodiments, the frequency of the elastic mode of oscillation may be determined experimentally.

In one embodiment, wherein the actuator element 305 comprises a piezoelectric element, a sensor output signal of the measuring probe 300 may be created on the basis of an electric current flowing through the piezoelectric element and through the first electrical connection 307 and the second electrical connection 308.

Due to the piezoelectricity of the piezoelectric element, and since the alternating voltage source may have a negligibly low impedance, at least a portion of the current flowing through the electrical connections 307, 308 may be representative of a deformation of the piezoelectric element in the longitudinal direction of the stylus 303. The deformation of the piezoelectric element, in turn, may depend on forces acting on the piezoelectric element. Hence, at least a portion of the current flowing through the electrical connections 307, 308 may be representative of forces acting between the stylus 303 and the countermass 302. Thus, the actuator element 305 may be employed both for creating the sensor output signal and for exhibiting a force between the stylus 303 and the countermass 302. Hence, the actuator element 305 may be used as a sensor-actuator element, and the measuring probe 300 may be operated in self-sensing mode.

In some embodiments, a compensation of blind currents caused by a capacity of the piezoelectric element in the actuator element 305 and/or other blind currents may be performed, for example by means of methods of real time computation. Thus, portions of the current flowing through the electrical connections 306, 307 which are caused by mechanical vibrations of the measuring probe 300 may be isolated from contributions of the blind currents.

As an additional feature, a feedback signal may be created from the sensor output signal on the basis of the current through the electrical connections 307, 306. This signal, shifted to have appropriately matching phase and amplitude, may be added to the signal of the external voltage source. In this configuration, the feedback signal will influence the losses per cycle of the measuring probe 300, and the measuring probe can be operated under the condition of artificially generated, different quality factors, when needed. In some embodiments of the present invention, the feedback signal may be generated in computation sub-units of the drive controller 240. The technique to positively feedback fractions of the sensor output signal to its input is well known as Q control to persons skilled in the art.

The present invention is not restricted to embodiments wherein the sensor output signal is created on the basis of the current flow through the electrical connections 307, 306. In other embodiments, the feedback signal may be created on the basis of a sensing element which is distinct from the actuator element 305, which then is used as an actuator only. For example, an additional piezoelectric sensing element may be provided in the measuring probe 300, for example in the countermass 302.

The oscillation of the measuring probe 300 may depend on the masses of the countermass 302 and the stylus 303 and, correspondingly, the first mass 351 and the second mass 352.

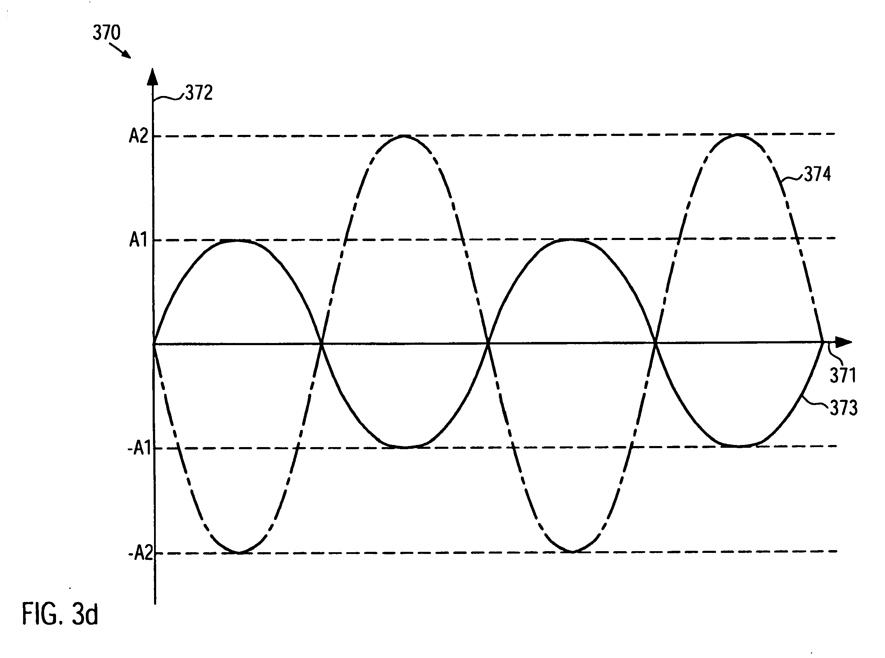

In some embodiments, the mass of the countermass 302 may be greater than the mass of the stylus 303. In the equivalent diagram 350, this may correspond to a first mass 351 being greater than the second mass 352. In the following, the oscillation of the measuring probe 300 in such embodiments will be described with reference to Fig. 3d.

Fig. 3d shows a diagram illustrating oscillations of the measuring probe 300. A first coordinate axis 371 denotes time, and a second coordinate axis 372 denotes positions of the first mass 351 and the second mass 352 relative to their rest positions. A first curve 373 shows the difference between the position of the first mass 351 along the longitudinal direction of the stylus 303 and the rest position of the first mass 351 as a function of time, and a second curve 374 shows the difference between the position of the second mass 352 along the longitudinal direction of the stylus 303 and the rest position of the second mass 352.

In a desired mode of oscillation, the position of the first mass 351 and the second mass 352 along the longitudinal direction may have a substantially sinusoidal dependence on time, wherein the first mass 351 and the second mass 352 move in opposite directions. Hence, when the first mass 351 is deflected towards the objective lens 211, corresponding to positive values of the curve 373, the second mass 352 is deflected towards the object 201, corresponding to negative values of the curve 374. Conversely, when the first mass 351 is deflected towards the object 201, corresponding to negative values of the curve 373, the second mass 352 is deflected towards the objective lens 211, corresponding to positive values of the curve 374. In embodiments wherein the first mass 351 is greater than the second mass 352, an amplitude A1 of the oscillation of the first mass 351 may be greater than an amplitude A2 of the oscillation of the second mass 352, since, in such embodiments, the first mass 351 has a greater inertia than the second mass 351.

In the measuring probe 300, a deflection of the tip 304 in the longitudinal direction of the stylus 303 from its rest position is related to the deflection of the second mass 352 in the equivalent diagram 352, and a deflection of the countermass 302 in the longitudinal direction of the stylus 303 from its rest position is related to the deflection of the first mass 351 in the equivalent diagram 350. Hence, in embodiments wherein the mass of the countermass 302 and the mass of the stylus 303 are selected such that they correspond to a first mass 351 being greater than the second mass 352, in particular in embodiments wherein the mass of the countermass 351 is greater than the mass of the stylus 303, an amplitude of the deflection of the tip 304 relative to its rest position is greater than an amplitude of the deflection of the countermass 302 relative to its rest position.

As detailed above, the support element 308 may be attached to a portion of a side surface of the countermass 302 adjacent an edge between the side surface and the bottom surface 323. Hence, the regions of attachment 390, 391, 392 are provided at a portion of the side surface of the countermass adjacent the edge between the side surface and the bottom surface 323. Since the amplitude of the displacement of the tip 304 relative to its rest position is greater than the amplitude of the displacement of the countermass 302 relative to its rest position, the amplitude of displacement of portions of the countermass 302 at the regions of attachment 390, 391, 392 is smaller than the amplitude of the displacement of the tip 304.

In some embodiments, the masses of the countermass 302 and the stylus 303 may be adapted such that the amplitude of the displacement of the regions of attachment 390, 391, 392 is smaller than one tenth of the amplitude of the displacement of the tip 304 and/or smaller than one hundredth of the amplitude of the displacement of the tip 304. In order to reduce the ratio between the amplitude of displacement of the regions of attachment 390, 391, 392 and the amplitude of the displacement of the tip 304, the ratio between the mass of the countermass 302 and the mass of the stylus 303 may be increased. Due to its greater inertia, the countermass 302 when having a relatively high mass, will move to a relatively small extent.

Furthermore, providing the regions of attachment 390, 391, 392 adjacent the edge between the side surface of the countermass 302 and the bottom surface 323 may help to further reduce the amplitude of displacement of portions of the body 301 at the regions of attachment 390, 391, 392, since the countermass 302 may oscillate when excited by the actuator 305, wherein portions of the countermass 302 in the vicinity of the top surface 324 may move relative to portions of the countermass 302 in the vicinity of the bottom surface 323 substantially in phase with the movement of the tip 304.

In the measuring probe 300, the actuator element 305 is arranged such that it exhibits a force between the second end 322 of the stylus 303 and the bottom surface 323 of the countermass 302 when the actuator element 305 is operated. Due to the elasticity of the stylus 303, the amplitude of the displacement of the second end 322 of the stylus 303 relative to the bottom surface 323 of the countermass 302 is smaller than the displacement of the measuring tip 304 relative to the bottom surface of the countermass, and may also be smaller than the displacement of the measuring tip 304 relative to its rest position. Hence, in order to oscillate the measuring tip 304 at a desired amplitude of oscillation, an amplitude of oscillation provided by the actuator element 305 may be smaller than the desired amplitude of oscillation of the measuring tip 304. The actuator element 305, however, may be exposed to inertial forces exhibited by the countermass 302 and the stylus 303, such that the force exhibited on the actuator element 305 may be greater than the force exhibited on the measuring tip 304 during the oscillation of the measuring probe 300.

Thus, the measuring probe 300 may act as a mechanical analogue of a transformer, wherein a small amplitude of oscillation and a relatively large force between the second end 322 of the stylus 303 and the bottom surface 323 of the countermass 302 is transformed to a relatively large amplitude of oscillation and a relatively low force acting on the tip 304.

As detailed above, in some embodiments, the actuator element 305 may be a piezoelectric actuator comprising a hard piezoelectric PZT material having a high mechanical and electrical immunity against any change of the grade of its piezo-electric polarization. It thus combines the advantages of quartz such as high mechanical quality factor and low electronic noise generation with the advantage of PZT of a high piezo-electric coupling factor.

As persons skilled in the art know, piezoelectric materials may provide a relatively large force at a relatively small amplitude of oscillation. The measuring probe 300 allows to transform the oscillations of this type provided by the piezoelectric element to oscillations having a relative large amplitude and a small force of oscillation, which are desirable for the oscillation of the measuring tip 304 in scanning microscopy.

In addition to the mode of oscillation described above, wherein the first mass 351 and the second mass 352 move in opposite directions, the measuring probe 300 may further comprise other modes of oscillation wherein the first mass 351 and the second mass 352 move in the same direction, and wherein inertial forces of the first mass 351 and the second mass 352 are balanced to a large extent by elastic forces exhibited by the springs 354, which are representative of the elasticity of the support element 308. This, however, may entail a relatively large damping by the dampers 355, which are representative of the damping in the support element 308. Hence, modes of oscillation wherein the first mass 351 and the second mass 352 oscillate concurrently may be damped to a relatively large extent, such that they have a relatively small Q-factor.

Conversely, in modes of oscillation wherein the first mass 351 and the second mass 352 move in opposite directions, the first mass 351 to which the springs 354 and the dampers 355 are connected, inertial forces exhibited by the masses 351, 352 may act mostly between the masses 351, 352, such that the springs 354 and the dampers 355 are deformed to a less extent, which entails a smaller damping and a greater Q-factor of such modes of oscillation.

Since the motion of the first mass 351 and the second mass 352 in the equivalent diagram 350 are representative of the motion of the countermass 301 and the measuring tip 304, respectively, in the measuring probe 300, modes of oscillation wherein the countermass 302 and the measuring tip move in opposite directions may have a greater Q-factor than modes of oscillation wherein the measuring tip 304 and the countermass 322 move concurrently. Thus, in embodiments wherein the Q-value is modified artificially using means of Q control as described on top, modes of oscillations wherein the measuring tip 304 and the countermass move concurrently remain far under the critical feedback loop gain of 1, which is when the corresponding mode would start to oscillate with rising amplitude. Only the oscillation mode oscillation in opposite direction is present, is augmented to a near critical value in cases when a very high Q value is necessary. This may help to reduce a mechanical load of the support element 308, since the support element 308 is deformed to a less extent in modes of oscillation wherein the measuring tip 304 and the countermass 302 move in opposite directions.

In the operation of the microscope 200, the optical observation unit 210 may be used to inspect the surface of the object 201 to be investigated. Since the optical observation unit 210 may provide a relatively large field of view, the optical observation unit 210 may be used to establish portions of the object 201 which deserve a more detailed inspection by means of scanning microscopy. Once a portion of the object 201 which is to be inspected by scanning microscopy is identified, the relative movement unit 203 may be operated to position the respective portion of the object 201 below the measuring tip 304. Thereafter, the actuator element 305 may be operated to oscillate the measuring probe 300, and the actuator 232 may be operated to approach the measuring tip 304 to the object 201. If the measuring tip 304 interacts with the object 201, an amplitude and/or phase of the elastic mode of oscillation of the measuring probe 300 may be altered with respect to the signal of the external voltage source.

The table 201 can be operated to move the object 201 relative to the measuring tip 304, and the actuator 232 may be operated to maintain the amplitude and/or phase of the oscillation of the measuring tip 304. Thus, a substantially equal interaction between the measuring tip 304 and the surface of the object 201 may be maintained, and the position of the measuring probe 300 along the optical axis L1, which may be substantially parallel to the longitudinal direction of the stylus 303, may follow the topography of the surface of the object 201. The position of the measuring probe 300 along the direction of the optical axis L1 may be detected by means of the interferometer 230, to measure the topography of the surface of the object 201. Since the mode of oscillation of the measuring probe 300 may have a moderately large Q-factor, the measurement of the topography of the surface of the object 201 may be performed at a relatively high speed.

For this purpose, a mirror portion may be provided on the top surface of the countermass 302. The mirror portion may reflect a portion of the light from the light source 235 reflected by the partially transmissive mirror 234 after passage of the light through the objective lens 211. The reflected light may then interfere with the light reflected from the mirror 241.

In some embodiments, the top surface of the countermass 302 may be polished to form the mirror portion. Additionally or alternatively, a reflective layer which may, for example, comprise aluminum and/or silver may be formed on the top surface 324 of the countermass 302.

The measuring probe 300 may act as a mechanical transformer, wherein a relatively small force acting on the tip 304 is transformed to a greater force at the location of the actuator element 305 and the countermass 302. Hence, the measuring probe 300 may be influenced by a relatively weak interaction between the measuring tip 304 and the object 201, which may help to increase the sensitivity of the measurement.

Since the amplitude of oscillation of the countermass 302 may be smaller than the amplitude of oscillation of the tip 304, the amplitude of oscillation of the countermass 302 which may reflect the light from the light source 235 may be small compared to the wavelength of the light if the amplitude of oscillation of the tip 304 is adapted for optimal performance of scanning microscopy. Hence, the interferometric measurement of the height of the measuring probe 300 may be influenced by the oscillation of the measuring probe 304 to a relatively small extent, which may help to improve a precision of the measurement.

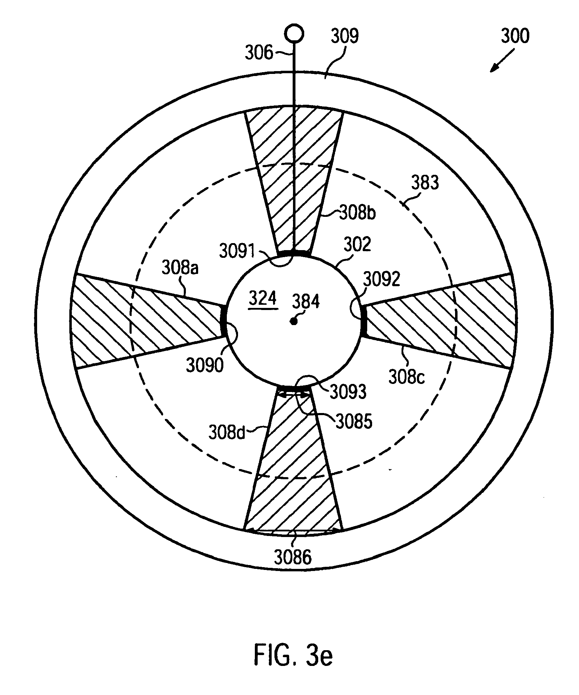

The present invention is not restricted to embodiments wherein the countermass 302 is supported by a single support element 308, as shown in Figs. 3a and 3b. In other embodiments, a plurality of support elements may be provided. In the following, such embodiments will be described with reference to Fig. 3e, which shows a schematic top view of a measuring probe 3000 according to an embodiment of the present invention. Features of the measuring probe 3000 other than the support element 308 may correspond to those of the measuring probe 300 described above with reference to Figs. 3a to 3d.

The measuring probe 3000 comprises a plurality of support elements 308a, 308b, 308c, 308d which connect the countermass 302 with the retaining ring 309. The support elements 308a, 308b, 308c, 308d may be attached to the countermass 302 in regions of attachment 3090, 3091, 3092, 3092 located on the side surface of the countermass 302 adjacent an edge between the side surface and the bottom surface 323 of the countermass 302.

Each of the regions of attachment 3090, 3091, 3092, 3093 may have a line of intersection with a plane which is perpendicular to the rotational axis of symmetry 384 of the body 301 of the measuring probe 301, similar to the plane 393 shown in Fig. 3a. A length of the lines of intersection may correspond to a width 3085 of portions of the support elements 308a, 308b, 308c, 308d adjacent the regions of attachment 3090, 3091, 3092, 3093. An extension of the regions of attachment 3090, 3091, 3092, 3093 in a direction perpendicular to the plane and parallel to the rotational axis of symmetry 384 may correspond to a thickness of portions of the support elements 308a, 308b, 308c, 308d adjacent the regions of attachment 3090, 3091, 3092, 3093.

The thickness of the portions of the support elements 308a, 308b, 308c, 308d adjacent the regions of attachment 3090, 3091, 3092 3093 may be smaller than the width 385 of the portions of the support elements 308a, 308b, 308c, 308d adjacent the regions of attachment 3090, 3091, 3092, 3093. Thus, the length of the line of intersection of each of the regions of attachment 3090, 3091, 3092, 3093 with the plane perpendicular to the rotational axis of symmetry 384 may be greater than the extension of the regions of attachment 3090, 3091, 3092, 3093 in a direction perpendicular to the plane.

In some embodiments, the thickness of the portions of the support elements 308a, 308b, 308c, 308d adjacent the regions of attachment 3090, 3091, 3092, 3093 may be less than one half of the width 3085 less than one tenth of the width 3085. and/or less than one hundredth of the width 3085, such that the extension of the regions of attachment in a direction perpendicular to the plane is less than one half of the length of the lines of intersection between the plane and the regions of attachment 3090, 3091, 3092, 3093, less than one tenth of the length of the lines of intersection and/or less than one hundredth of the length of the lines of intersection, respectively.

A width 3086 of portions of the support elements 308a, 308b, 308c, 308d adjacent the retaining ring 309 may be greater than the width 3085 of portions of the support elements 308a, 308b, 308c, 308d adjacent the countermass 302. Thus, each of the support elements 308a, 308b, 308c, 308d comprises a portion wherein the width of the respective support element increases with increasing distance from the rotational axis of symmetry 384. Similarly, the thickness of the support elements 308a, 308b, 308c, 308d may increase with increasing distance from the rotational axis of symmetry 384.

The present invention is not restricted to embodiments wherein the thickness and/or width of the support elements 308a, 308b, 308c, 308d increases with increasing distance from the rotational axis of symmetry 384. In other embodiments, the support elements 308a, 308b, 308c, 308d may have a substantially prismoidal shape.

Further features of the support elements 308a, 308b, 308c, 308d may correspond to those of the support element 308 described above with reference to Figs. 3a to 3d.

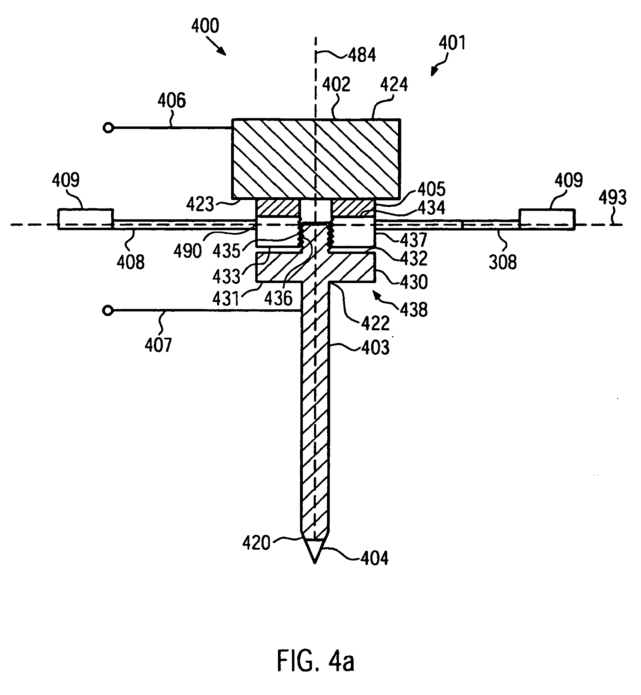

Further embodiments of the present invention will be described with reference to Figs. 4a to 4d.

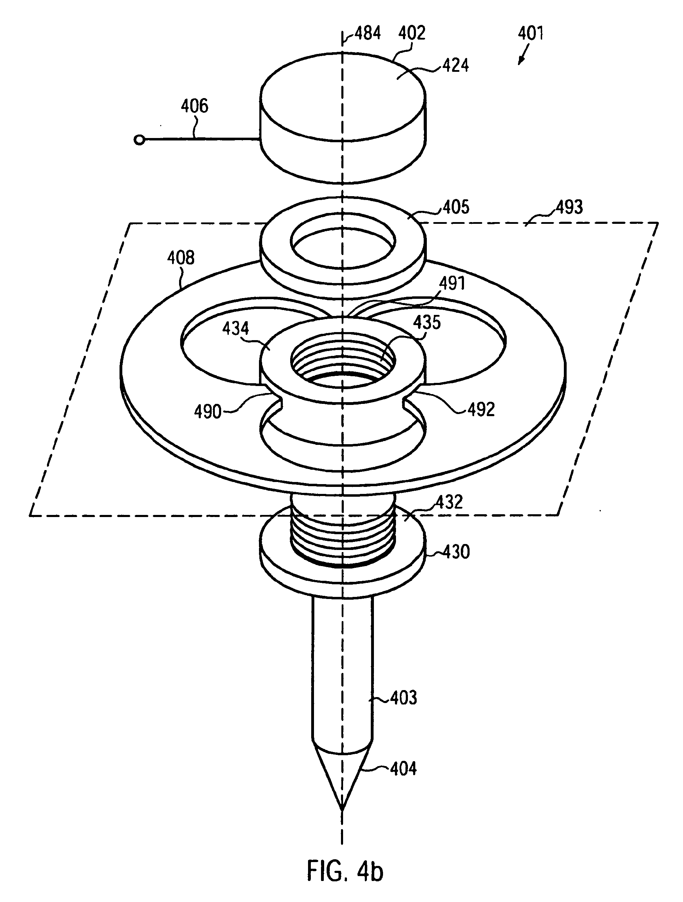

Fig. 4a shows a schematic cross-sectional view of a measuring probe 400, which may be provided in the microscope 200 instead of the measuring probe 300 described above. A schematic explosive view of the measuring probe 400 is shown in Fig. 4b.

The measuring probe 400 comprises a stylus 403. In some embodiments, the stylus 403 may have the shape of a solid cylinder. A measuring tip 404 is connected to a first end 420 of the stylus 403. A second end 422 of the stylus 403 is connected to a bottom surface 431 of a screw 430. At a top surface 432 of the screw 430 opposite the bottom surface 431, a threaded portion 436 is provided. The threaded portion 436 is screwable to a nut 437 which comprises a thread 435 mating with the threaded portion 436 of the screw 430. If the screw 430 is screwed into the nut 437, the top surface 432 of the screw 430 faces a bottom surface 433 of the nut 437. In some embodiments, the screw 430 may comprise a standard, small size screw, for example a M1×1 screw with a cylinder head. Similar to the stylus 303 described above, the stylus 403 can be assembled from a piece of wire.

A first countermass 402 is provided above a top surface 434 of the nut 437, which is opposite the bottom surface 433 of the nut 437. An actuator element 405 is provided between the top surface 434 of the nut 437 and a bottom surface 423 of the first countermass 424. Similar to the measuring probes 300 and 3000 described above with reference to Figs. 3a to 3e, a top surface 424 of the first countermass may comprise a mirror portion, which may be used for an interferometric measurement of the position of the first countermass 402 along a longitudinal direction of the stylus 403.

The threaded portion 436 of the screw 430 and the thread 435 of the nut 437 may provide a connection between the screw 430 and the nut 437 which substantially prevents a motion of the screw 430 relative to the nut 437. Hence, the screw 430 and the nut 437 together provide a second countermass 438 arranged between the second end 422 of the stylus 403 and the actuator element 405.

The stylus 403, the screw 430 and the nut 437 together form a body 401 of the measuring probe 400.

The stylus 403 and the measuring tip 404 may have features similar to those of the stylus 303 and the measuring tip 304 described above with reference to Figs. 3a to 3e. While, in some embodiments of the present invention, the stylus 403 may be connected to the bottom surface 431 of the screw 430 by known assembling techniques such as soldering or welding, for example spot welding, in other embodiments, the stylus 403 and the screw 430 may be integral. In such embodiments, the stylus 403 and the screw 430 may be machined from a monolithic blank material.

The measuring probe 400 may be connected to a retaining ring 409 which is attachable to the holder 231 of the microscope by means of a support element 408. Thus, the measuring probe 400 may be provided in front of the objective lens 211 of the optical observation unit 210.

The support element 408 and the retaining ring 409 may have features corresponding to those of the support element 308 and the retaining ring 309 described above with reference to Figs. 3a to 3c. In other embodiments, a plurality of support elements may be provided instead of a single support element 408, similar to the support elements 308a, 308b, 308c, 308d described above with reference to Fig. 3e.

The support element 408 may be connected between the retaining ring 409 and the nut 437. In some embodiments, the support element 408 may be connected to regions of attachment 490, 491, 492 located on a side surface of the nut 437 adjacent an edge between the side surface and the top surface 434 of the nut 437.

Similar to the measuring probes 300, 3000 described above with reference to Figs. 3a to 3e, the body 401 of the measuring probe 400 may have a rotational symmetry with a rotational axis of symmetry 484 running through the tip 404. In some embodiments, the stylus 403, the screw 403 and the nut 437 may have a substantially cylindrical configuration such that the body 401 of the measuring probe 401 has a cylindrical symmetry.

A plane 493 perpendicular to the rotational axis of symmetry 484 may intersect each of the regions of attachment 490, 491, 492 at a line of intersection, wherein an extension of each of the regions of attachment 490, 491, 492 in a direction perpendicular to the plane 493 and parallel to the rotational axis of symmetry 484 is smaller than a length of the lines of intersection, as described above in more detail for the support element 308. Further features of the regions of attachment 490, 491, 492 may correspond to features of the regions of attachment 390, 391, 392, 3090, 3091, 3092, 3093 in the measuring probes 300, 3000 described above with reference to Figs. 3a to 3e.

The actuator element 405 may comprise a piezoelectric element. In some embodiments of the present invention, the actuator element 405 may comprise a piezoelectric element having a ring-shaped configuration with a central opening located above the threaded portion 436 of the screw 430. In some of these embodiments, the actuator element 405 may comprise a piezoelectric washer of a type known to persons skilled in the art. Similar to the piezoelectric element 305 of the measuring probes 300, 3000 described above with reference to Figs. 3a to 3e, the actuator element 405 may comprise a hard piezoelectric material having a high immunity against electrically or mechanically induced changes of the grade of piezo-electric polarization, and a high piezo-electric coupling factor.

The measuring probe 400 may further comprise a first electrical connection 407 connected to the nut 437 and a second electrical connection 406 connected to the first countermass 402. By applying an electric voltage between the first electrical connection 407 and the second electrical connection 406, an electric voltage may be applied between the top surface 434 of the nut 437 and the bottom surface 423 of the first countermass 402. Thus, the piezoelectric element of the actuator element 405 may be exposed to an electric field for creation of a force acting between the first countermass 402 and the second countermass 438.

The measuring probe 400 may have an elastic mode of oscillation wherein an amplitude of a displacement of the bottom surface 423 of the first countermass 402 relative to the top surface 434 of the nut 437 is smaller than an amplitude of a displacement of the tip 404 relative to the rest position of the measuring tip 404. Thus, similar to the measuring probe 300 described above with reference to Figs. 3a to 3e, the measuring probe 400 may act as a mechanical transformer for increasing the amplitude of oscillations provided by the actuator interface 405.

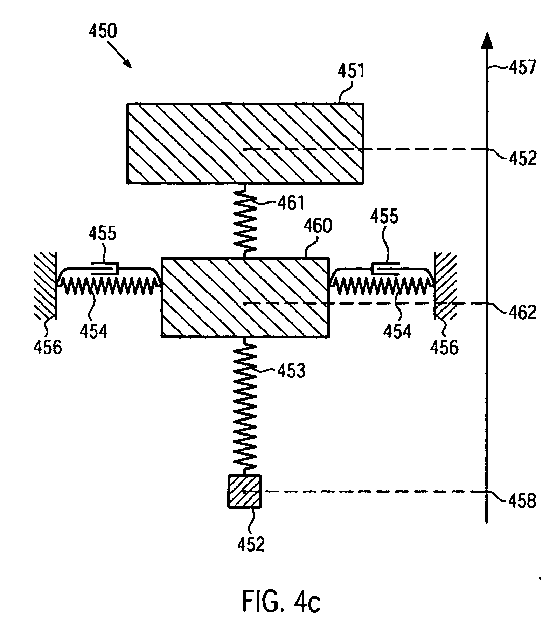

Modes of oscillation of the measuring probe 400 will be described with reference to Fig. 4c, which shows a schematic equivalent diagram 450 of the measuring probe 400.

In the equivalent diagram 450, reference numeral 451 denotes a first mass which is representative of inertial forces occurring in the first countermass 402. A second mass 460 is representative of inertial forces occurring in the second countermass 438 provided by the screw 430 and the nut 437, and a third mass 452 is representative of inertial forces occurring in the stylus 403.

A first spring 461 is representative of elastic forces acting between the first countermass 402 and the second countermass 438. Such elastic forces may, in particular, be caused by the elasticity of the nut 437 and the actuator element 405. A second spring 453 is representative of elastic forces occurring in the stylus 403, similar to the spring 353 in the equivalent diagram 350 shown in Fig. 3c.

Further springs 454 are representative of elastic forces in the support element 408, and dampers 455 are representative of damping properties of the support element 408, similar to the springs 354 and dampers 355 shown in Fig. 3c. The retaining ring 409, being fixed to the holder 231 of the microscope 200, may be represented by a fixed wall 456.

Similar to the masses 351, 352 in the equivalent diagram 350 shown in Fig. 3b, the first mass 451, the second mass 460 and the third mass 452 are effective masses, and may be regarded as point masses for purposes of understanding the oscillations of the measuring probe 400. The springs 461, 453, 454 may be regarded as ideal springs, and the dampers 455 may be regarded as ideal dampers providing a force being proportional to the velocity of the second mass 460 relative to the wall 456 and acting in a direction opposite the direction of motion of the second mass 460.

Similar to the measuring probe 300 described above, the damping of the motion of the components of the measuring probe 400 may be compensated by the actuator element 405, when, after some time for building up of the externally excited vibration has passed, the resonance is quasi stationary. In some embodiments, the actuator element 405 may not be operated in a self-sensing mode, wherein the reading of the sensor signal is performed using other means for transforming the mechanical vibration of the measuring probe 400 into an electronic voltage signal. The actuator element 405 then is exclusively used as an actuator. For instance, in some embodiments, the sensor output signal may be created on the basis of a signal provided by an additional sensor element (not shown) in the measuring probe 400 which is distinct from the actuator element 405. Thus, a substantially periodic motion of the masses 451, 460, 452 may be obtained.

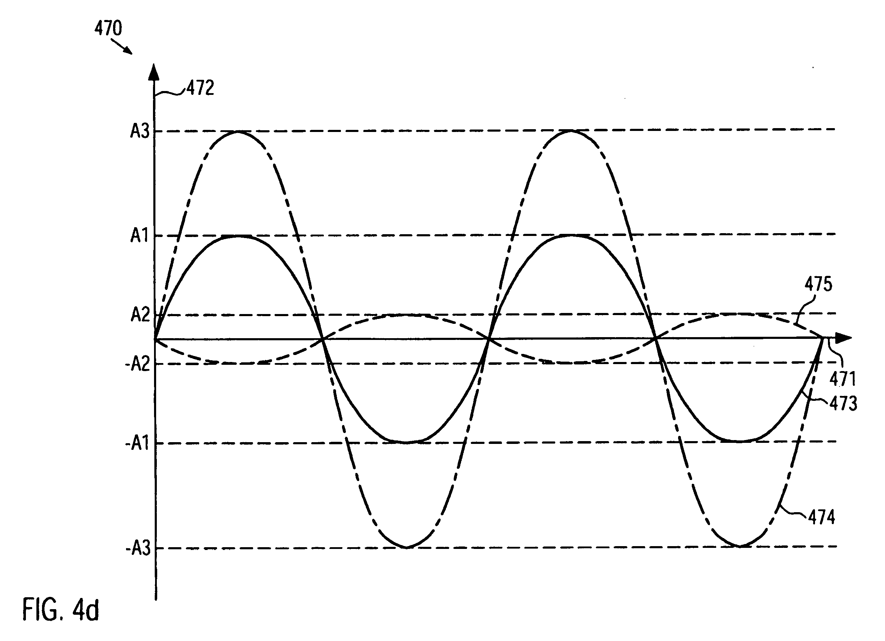

The motion of the masses 451, 460, 452 in one mode of oscillation of the measuring probe 400 is illustrated in Fig. 4d. Fig. 4d shows a diagram 470 comprising a first coordinate axis 472 which denotes time, and a second coordinate axis 471 which denotes deviations of positions of the masses 451, 460, 452 from their rest positions along the longitudinal direction of the stylus 403.

In Fig. 4c, the longitudinal direction of the stylus 403 is represented by an arrow 457. Reference numeral 459 denotes a position of the first mass 451 along the longitudinal direction 457. Reference numerals 462, 458 denote positions of the second mass 460 and the third mass 452, respectively.

In Fig. 4d, a first curve 473 illustrates the time dependence of the deviation between the position 459 of the first mass 451 and the rest position of the first mass 451. A second curve 475 illustrates the time dependence of the deviation between the position of the second mass 460 and the rest position of the second mass 460. A third curve 473 illustrates the time dependence of the deviation between the position of the third mass 452 and the rest position of the third mass 452.

In the mode of oscillation shown in Fig. 4d, which may be a desired mode of oscillation of the measuring probe 400, the first mass 451 and the third mass 452 move in the same direction, whereas the second mass 460 moves in a direction opposite the direction of motion of the first mass 451 and the third mass.

Since the first mass 451 is representative of the first countermass 402, the second mass 460 is representative of the second countermass 438 and the third mass 452 may be representative of the front portion of the stylus 403 to which the tip 404 is attached, the first countermass 402 and the tip 404 may move in the same direction in the desired mode of oscillation of the measuring probe 400, and the second countermass 438 may move in the counter direction.

The positions of the masses 451, 460, 451 may have a sinusoidal dependence on time, wherein an amplitude A1 of the displacement of the first mass 451, an amplitude A2 of the displacement of the second mass 460 and an amplitude A3 of the displacement of the third mass 452 depend on the first mass 451, the second mass 460 and the third mass 452, which are related to the mass of the first countermass 402, the mass of the second countermass 430 and the mass of the stylus 403, respectively. Hence, the amplitudes A1, A2, A3 and, correspondingly, the amplitudes of the displacement of the measuring tip 404, the first countermass 402 and the second countermass 438 may be controlled by selecting appropriate masses of the components of the measuring probe 400.

In the mode of oscillation illustrated in Fig. 4d, the amplitude A2 of the oscillation of the second mass 460 is relatively small compared to the amplitude A3. Since the amount of energy dissipated in the dampers 455, which are connected to the second mass 460, and which represent the damping properties of the support member 408, depends on the speed of the second mass 460, the illustrated mode of oscillation may be damped to a relatively small extent, such that a moderately large Q-factor of the desired mode of oscillation can be obtained.

In the measuring probe 400, the amplitude of the displacement of the regions of attachment 490, 491, 492 relative to their rest positions, which may correspond to the amplitude of the displacement of the second mass 460, may be less than one tenth of the amplitude of the displacement of the tip 404 relative to its rest position and/or less than one hundredth of the amplitude of the displacement of the tip 404 relative to its rest position.

In other modes of oscillation of the measuring probe 400, the speed of the movement of the second mass 460 may be greater, such that a relatively low Q-factor is obtained for the other modes of oscillation. Thus, undesirable modes of oscillation may be suppressed.

The masses of the first countermass 402, the second countermass 438 and the stylus 403 may further be adapted such that the amplitude of the displacement of the first countermass 402 relative to its rest position is smaller than the amplitude of the displacement of the measuring tip 404 relative to its rest position. This may help to obtain more precise measurements of the position of the first countermass 402 along the stylus 403 by means of interferometry. Additionally, the amplitude of the displacement of the measuring tip 404 relative to its rest position may be greater than the amplitude of the displacement of the top surface 434 of the nut 437 relative to the bottom surface 423 of the first countermass. Thus, the amplitude of oscillation of the measuring tip 404 may be greater than the amplitude of oscillation provided by the actuator element 405.

In some embodiments of the present invention, the mass of the first countermass 402 may be greater than the mass of the stylus 403. Additionally, the mass of the second countermass 437, which may be given by the sum of the mass of the screw 430 and the mass of the nut 437, may be greater than the mass of the stylus 403 and/or the sum of the mass of the first countermass 402 and the mass of the second countermass 437 may be greater than the mass of the stylus 403.

In some embodiments of the present invention, the mass of the first countermass 402 can be in the range of 50 - 100 mg, the sum of the masses of the screw 430 and the nut 437 can be in the range of 30 - 60 mg, and the total mass of the stylus 403 can be in the range of 0.2 - 0.4 mg. Thus, the difference in mass between the vibrating portion of the stylus 403 and the countermasses 402, 438 may range between 2 and 3 orders of magnitude. The amount of motion of the bottom end 420 of the stylus 403 may, in turn, be about 2 to 3 orders of magnitude greater than the amount of motion of the top mass. Typical dimensions may lie in the range of about 3 mm diameter x 1 mm height for the first countermass 402 and about 2 mm diameter x 2 mm height for the screw 430 and the nut 437 forming the second countermass 438. The diameter of the stylus 403 may be in the range between 0.1 and 0.2 mm, its length in the range between 2 mm and 5 mm. In the assembly of the measuring probe 400, techniques for providing metallic links such as soldering and welding techniques can be used. The piezoelectric element in the actuator 405 may be a washer-shaped or disc-shaped, single layer, hard piezo-electric material.

In the measuring probe 400, the connection between the screw 430 and the nut 437 may be released by unfastening the connection between the threaded portion 436 of the screw 430 and the thread 435 of the nut 437. Thus, the stylus 403 and the measuring tip 404 may be exchanged in case of a deterioration of the stylus 403 and/or the measuring tip 404.

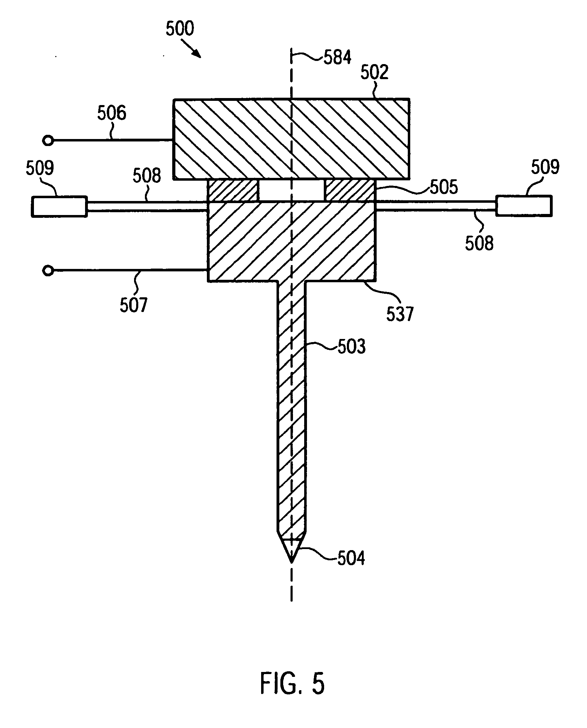

Fig. 5 shows a measuring probe 500 according to a further embodiment of the present invention. The measuring probe 500 may be provided in the microscope 200 instead of the measuring probe 300, 3000 and 400 described above.

The measuring probe 500 comprises a measuring tip 504 connected to a stylus 503. In some embodiments, the stylus 503 may have the shape of a solid cylinder. The measuring probe 500 further comprises a first countermass 502, a actuator element 505, a support element 508 connecting the measuring probe 500 to a retaining ring 509, a first electrical connection 507 and a second electrical connection 506. These components of the measuring probe 500 may have features similar to those of corresponding components of the measuring probes 400 and 300 described above.

The measuring probe 500 further comprises a second countermass 537 provided between the actuator element 505 and the stylus 503. The stylus 503, the first countermass 502 and the second countermass 537 together form a body of the measuring probe 500 having a rotational axis of symmetry 584, the tip 504 being located on the rotational axis of symmetry 584. The support element 508 may be connected to the second countermass 537.

Features of the support element 508 and the attachment of the support element 508 to the second countermass 537 may correspond to features of the support elements 308, 308a, 308b, 308c, 308d, 408 and the attachment thereof described above with reference to Figs. 3a to 4d.

The actuator element 505 may exhibit a force between the first countermass 503 and the second countermass 537. The second countermass 537 may be an integral component. Additionally, in some embodiments, the stylus 503 may be integral with the second countermass. This may help to improve a stability and/or a reproducibility of the elastic modes of oscillation of the measuring probe 500. In other embodiments, the stylus 503 may be connected to the second countermass 537 by soldering and/or welding, for example by means of spot welding.

In the measuring probe 500, masses of the first countermass 502, the second countermass 537 and the stylus 503 and relations between the masses may correspond to those of corresponding components of the measuring probe 400 described above with reference to Figs. 4a to 4d.

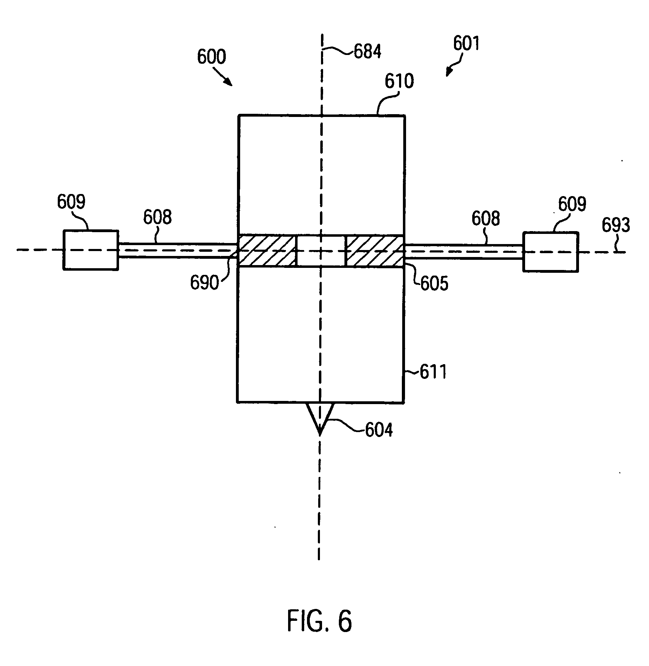

Further embodiments of the present invention will be described with reference to Fig. 6.

Fig. 6 shows a schematic cross-sectional view of a measuring probe 600 according to another embodiment of the present invention.

The measuring probe 600 comprises a body 601. The body 601 comprises a top mass 610, a bottom mass 611 and an actuator 605 provided between the top mass 610 and the bottom mass 611. Similar to the actuator 405 in the embodiment described above with reference to Figs. 4a to 4d, the actuator 405 may comprise a piezoelectric element having a ring-shaped configuration, for example a piezoelectric washer of a type known to persons skilled in the art. Features of the actuator 605 may correspond to those of the actuators 305, 405, 505 in the embodiments of the present invention described above.

The top mass 610, the bottom mass 611 and the actuator may have a rotational symmetry. In one embodiment, each of the top mass 610, the actuator 605 and the bottom mass 611 may have a substantially cylindrical shape. Alternatively, the actuator 605 may have a ring-shape. Thus, the body 601 may have a cylindrical symmetry. In Fig. 6, reference numeral 684 denotes a rotational axis of symmetry of the body 601 running through a central opening of the actuator 605.

The present invention is not restricted to embodiments wherein the body 601 has a cylindrical symmetry. In other embodiments, the body 601 may have a rotational symmetry of order n, wherein n is a natural number not less than two. For example, the top mass 610, the actuator 605 and the bottom mass 611 may have a square or hexagonal cross-section, thus having a four-fold or six-fold rotational symmetry, respectively.

The measuring probe 600 further comprises a support element 608 connected to the actuator 605 at one or more regions of attachment 690. Features of the support element 608 may correspond to those of the support elements 308, 408, 508 described above. In some embodiments, a plurality of support elements similar to the support elements 308a, 308b, 308c, 308d may be provided instead of a single support element.

Moreover, the one or more regions of attachment 690 may have features corresponding to those of the regions of attachment in the embodiments of the present invention described above. In particular, each of the one or more regions of attachment 690 may have a line of intersection with a plane 393 perpendicular to the rotational axis of symmetry 684 intersecting each of the one or more regions of attachment and an extension in a direction perpendicular to the plane 393 and parallel to the rotational axis of symmetry 684, wherein the extension of each of the one or more regions of attachment 690 in the direction perpendicular to the plane 393 is smaller than the length of the line of intersection between the plane 393 and the respective region of attachment. For example, in one embodiment, each of the regions of attachment 690 may be a line of attachment lying in the plane 393.

A measuring tip 604 may be connected to the bottom mass 611. The mass of the top mass 610 may be approximately equal to the mass of the bottom mass 611, and the mass of the tip 604 may be small compared to the masses of the top mass 610 and the bottom mass 611 such that the elastic modes of oscillation are not significantly influenced by the presence of the tip 604.

In such embodiments, the body 601 may have an elastic mode of oscillation wherein the top mass 610 and the bottom mass 611 move in opposite directions. When the top mass 610 is moving in a downward direction towards the object 201 to be investigated, the bottom mass 611 is moving in an upward direction. Conversely, when the bottom mass 611 is moving in an upward direction away from the object 201 to be investigated, the top mass 610 is moving in a downward direction.

In this elastic mode of oscillation, portions of the body 601 between the top mass 610 and the bottom mass 611 may substantially remain at rest. Hence, the elastic mode of oscillation may comprise a nodal plane lying between the top mass 610 and the bottom mass 611. In some embodiments, the nodal plane may run through the actuator 605. A location of the nodal plane may be approximately equal to the location of the plane 393 shown in Fig. 6. Hence, the nodal plane of the elastic mode of oscillation may intersect each of the one or more regions of attachment 690. Thus, the one or more regions of attachment 690 may be provided on portions of the body 601 which substantially do not move at all in the elastic mode of oscillation or have an amplitude of displacement which is small compared to the amplitude of the displacement of the measuring tip 604. Thus, a damping of the elastic mode of oscillation caused by damping properties of the support element 608 may be relatively small.

In some embodiments, the one or more regions of attachment 690 may be lines of attachment lying in the nodal plane of the elastic mode of oscillation. This may help to further reduce an influence of the support element 608 on the elastic mode of oscillation.

The present invention is not restricted to embodiments wherein the measuring tip 304, 405, 504, 604 is adapted for scanning force microscopy. In other embodiments, the measuring tip 504 may be adapted for scanning tunneling microscopy and/or optical near field microscopy.

Furthermore, the present invention is not restricted to embodiments wherein the measuring probe 300, 3000, 400, 500 or 600 is adapted for scanning microscopy. In other embodiments, the measuring probe 300, 3000, 400, 500 or 600 may be adapted for use as a sensor in a coordinate measuring machine. For this purpose, dimensions of components of the measuring probe 300, 3000, 400, 500 or 600 may be increased to conform with the requirements of coordinate measuring machines, and the tip 304, 404, 504 or 604 may be replaced with a coordinate measuring probe of a type known to persons skilled in the art.

Moreover, the present invention is not restricted to embodiments wherein the measuring probe 300, 3000, 400, 500 or 600 is provided in a microscope which allows an investigation of an object by means of techniques of optical far field microscopy in addition to an investigation of the object by means of techniques of scanning microscopy. In other embodiments, the optical observation unit 210 of the microscope 200 may be omitted.

The present invention is not restricted to embodiments wherein the one or more support elements 308, 308a, 308b, 308c, 308d, 408, 508, 608 are substantially flat. In some embodiments of the present invention, the one or more support elements 308, 308a, 308b, 308c, 308d, 408, 508, 608 may have a three-dimensional shape, for example a truncated conical shape, wherein the circumference of one base of the truncated cone is connected to the retaining ring 309, 409, 509, 609 an the body of the measuring probe is connected to the circumference of the other base of the truncated cone. In further embodiments, the one or more support elements 308, 308a, 308b, 308c, 308d, 408, 508, 608 may have a prismatoidal shape.

**Claims**

1. A measuring probe (300) for a measuring instrument (200) comprising:

    a body (301) having an elastic mode of oscillation;
    a measuring tip (304) connected to said body (301);
    an actuator (305) adapted to excite said elastic mode of oscillation of said body (301); and
    at least one support element (308) adapted for attachment of said body (301) to another component of said measuring instrument (200);

    **characterized in that**
    said at least one support element (308) is connected to said body (301) at one or more regions of attachment, (390, 391, 392) each of said one or more regions of attachment (390, 391, 392) having a line of intersection with a plane (393) intersecting each of said one or more regions of attachment (390, 391, 392) and an extension (394) in a direction perpendicular to said plane (393) said extension (394) in said direction perpendicular to said plane (393) being less than a length of said line of intersection; wherein said body (301) has a rotational axis of symmetry (384) perpendicular to said plane (393); and wherein said measuring tip (304) is lying on said rotational axis of symmetry (384).

2.  A measuring probe as in claim 1, wherein each of said one or more regions of attachments (390, 391, 392) is a line of attachment lying in said plane (393).

3.  A measuring probe as in claim 2, wherein said one or more lines of attachment lie in a nodal plane of said elastic mode of oscillation and/or less than at least one of one half of a total height of said body (301), one tenth of said total height of said body (301) and one hundredth of said total height away from said nodal plane of said elastic mode of oscillation.

4.  A measuring probe as in any of claims 1 to 3, further comprising a retaining element (309) having an opening, said retaining element having a rotational symmetry, said rotational axis of symmetry (384) of said body (301) being also a rotational axis of symmetry of said retaining element (309) said at least one support element (308) connecting said body (301) and said retaining element (309).

5.  A measuring probe as in claim 4, wherein at least one of said retaining element (309) and said body (301) has a cylindrical symmetry.

6.  A measuring probe as in any of claims 1 to 5, wherein, in said elastic mode of oscillation, amplitudes of displacement of portions of said body (301) in said one or more regions of attachment relative to rest positions of said portions are smaller than at least one of an amplitude of displacement of said tip (304) relative to a rest position of said tip, one half of said amplitude of displacement of said tip and one tenth of said amplitude of displacement of said tip.

7.  A measuring probe as in any of claims 1 to 6, wherein said actuator (305) is provided as a portion of said body (301), and wherein said at least one support element (308) is connected to said actuator (305).

8.  A measuring probe according to any of claims 1 to 7, wherein said at least one support element (308) comprises a damping element adapted to reduce a Q-factor of elastic modes of oscillation of said body (301) other than said elastic mode of oscillation.

9.  A measuring probe according to any of claims 1 to 8, wherein at least a portion of said at least one support element (308) is transparent.

10. A measuring probe according to claim 2, wherein said at least one support element (308) comprises:

    a first portion comprising a first material;
    a second portion comprising a second material;
    wherein a vibration damping loss factor of said second material is greater than a vibration damping loss factor of said first material and wherein Young's modulus of the first material is greater Young's modulus of the second material.

11. A measuring probe according to claim 10, wherein said at least one support element (308) comprises a laminate of said first material and said second material.

12. A measuring probe according to claim 10, wherein said second portion of said support element (308) is connected between said first portion of said support element (308) and said body (301).

13. A measuring probe according to any of claims 1 to 12, wherein said at least one support element (308) comprises at least one portion wherein a thickness (395) of said at least one support element (308) in a direction parallel to said rotational axis of symmetry (384) increases with increasing distance from said rotational axis of symmetry (384).

14. A measuring probe according to any of claims 1 to 13, wherein said at least one support element (308) comprises at least one portion wherein a width (385) of said at least support element (308) in a direction perpendicular to said rotational axis of symmetry (384) increases with increasing distance from said rotational axis of symmetry (384).

15. A microscope (200), comprising:

    a measuring probe (300) according to claim 1;
    an optical far field microscope comprising an objective lens (211), said measuring probe (300) being arranged between said objective lens (211) and a focal plane of said objective lens (211), said rotational axis of symmetry (384) of said body (301) being aligned with an optical axis (41) of said optical far field microscope; and a microscope actuator (232) connected between said objective lens (211) and said measuring probe (300) for moving said measuring probe (300) in a direction substantially parallel to said optical axis (41) of said optical far field microscope.

**Patentansprüche**

1.  Eine Messsonde (300) für ein Messinstrument (200) mit:

    einem Körper (301) mit einer elastischen Schwingungsmode;
    einer Messspitze (304), die mit dem Körper (301) verbunden ist;
    einem Aktuator (305), der dafür geeignet ist, die elastische Schwingungsmode des Körpers (301) anzuregen; und
    mindestens einem Trageelement (308), das dafür geeignet ist, den Körper (301) an einem anderen Teil des Messinstruments (200) zu befestigen;

    **dadurch gekennzeichnet, dass**

    das mindestens eine Trageelement (308) an einem oder mehreren Befestigungsbereichen (390, 391, 392) mit dem Körper (301) verbunden ist, wobei jeder der ein oder mehr Befestigungsbereiche (390, 391, 392) eine Schnittlinie mit einer Ebene (393), die jeden der ein oder mehr Befestigungsbereiche (390, 391, 392) schneidet, und eine Ausdehnung (394) in einer Richtung, die zu der Ebene (393) senkrecht ist, hat, wobei die Ausdehnung (394) in der Richtung senkrecht zu der Ebene (393) kleiner als eine Länge der Schnittlinie ist;
    wobei der Körper (301) eine Drehsymmetrieachse (384) hat, die zu der Ebene (393) senkrecht ist; und
    wobei die Messspitze (304) auf der Drehsymmetrieachse (384) liegt.

2.  Eine Messsonde nach Anspruch 1, wobei jeder der ein oder mehr Befestigungsbereiche (390, 391, 392) eine Befestigungslinie ist, die in der Ebene (393) liegt.

3.  Eine Messsonde gemäß Anspruch 2, wobei die ein oder mehr Befestigungslinien in einer Knotenebene der elastischen Schwingungsmode und/oder weniger als mindestens eines von einer Hälfte einer Gesamthöhe des Körpers (301), einem Zehntel der Gesamthöhe des Körpers (301) und einem Hundertstel der Gesamthöhe von der Knotenebene der elastischen Schwingungsmode entfernt liegen.

4.  Eine Messsonde gemäß einem der Ansprüche 1 bis 3, die zusätzlich ein Halteelement (309) mit einer Öffnung umfasst, wobei das Halteelement eine Drehsymmetrie hat, wobei die Drehsymmetrieachse (384) des Körpers (301) auch eine Drehsymmetrieachse des Halteelements (309) ist, und wobei das mindestens eine Trageelement (308) den Körper (301) und das Halteelement (309) verbindet.

5.  Eine Messsonde gemäß Anspruch 4, wobei mindestens eines von dem Halteelement (309) und dem Körper (301) eine Zylindersymmetrie aufweist.

6.  Eine Messsonde gemäß einem der Ansprüche 1 bis 5, wobei in der elastischen Schwingungsmode Amplituden der Auslenkung von Teilen des Körpers (301) in den ein oder mehr Befestigungsbereichen relativ zu den Ruhepositionen dieser Teile kleiner als mindestens eines von einer Amplitude der Auslenkung der Spitze (304) relativ zu einer Ruheposition der Spitze, einer Hälfte der Amplitude der Auslenkung der Spitze und einem Zehntel der Amplitude der Auslenkung der Spitze sind.

7.  Eine Messsonde gemäß einem der Ansprüche 1 bis 6, wobei der Aktuator (305) als ein Teil des Körpers (301) bereitgestellt ist, und wobei das mindestens eine Trageelement (308) mit dem Aktuator (305) verbunden ist.

8.  Eine Messsonde gemäß einem der Ansprüche 1 bis 7, wobei das mindestens eine Trageelement (308) ein Dämpfelement umfasst, das dafür geeignet ist, einen Q-Faktor von anderen elastischen Schwingungsmoden des Körpers (301) als der genannten elastischen Schwingungsmode zu verringern.

9.  Eine Messsonde gemäß einem der Ansprüche 1 bis 8, wobei zumindest ein Teil des mindestens einen Trageelements (308) durchsichtig ist.

10. Eine Messsonde gemäß Anspruch 2, wobei das mindestens eine Trageelement (308) umfasst:

    einen ersten Teil, der ein erstes Material umfasst;
    einen zweiten Teil, der ein zweites Material umfasst;
    wobei ein Schwingungsdämpfungsverlustfaktor des zweiten Materials größer als ein Schwingungsdämpfungsverlustfaktor des ersten Materials ist, und wobei der Youngsche Elastizitätsmodul des ersten Materials größer als der Youngsche Elastizitätsmodul des zweiten Materials ist.

11. Eine Messsonde gemäß Anspruch 10, wobei das mindestens eine Trageelement (308) ein Laminat aus dem ersten Material und dem zweiten Material umfasst.

12. Eine Messsonde gemäß Anspruch 10, wobei der zweite Teil des Trageelements (308) zwischen dem ersten Teil des Trageelements (308) und dem Körper (301) verbunden ist.

13. Eine Messsonde gemäß einem der Ansprüche 1 bis 12, wobei das mindestens eine Trageelement (308) mindestens einen Teil umfasst, in dem eine Dicke (395) des mindestens einen Trageelements (308) in einer Richtung parallel zu der Drehsymmetrieachse (384) mit zunehmendem Abstand von der Drehsymmetrieachse (384) zunimmt.

14. Eine Messsonde gemäß einem der Ansprüche 1 bis 13, wobei das mindestens eine Trageelement (308) mindestens einen Teil umfasst, in dem eine Breite (385) des mindestens einen Trageelements (308) in einer Richtung senkrecht zu der Drehsymmetrieachse (384) mit zunehmendem Abstand von der Drehsymmetrieachse (384) zunimmt.

15. Ein Mikroskop (200) mit:

einer Messsonde (300) gemäß Anspruch 1;
einem optischen Fernfeldmikroskop mit einem Objektiv (211), wobei die Messsonde (300) zwischen dem Objektiv (211) und einer Brennebene des Objektivs (211) angeordnet ist, und die Drehsymmetrieachse (384) des Körpers (301) entlang einer optischen Achse (L1) des optischen Fernfeldmikroskops ausgerichtet ist; und
einem Mikroskopaktuator (232), der zwischen dem Objektiv (211) und der Messsonde (300) verbunden ist, um die Messsonde (300) in einer Richtung, die zu der optischen Achse (L1) des optischen Fernfeldmikroskops im Wesentlichen parallel ist, zu bewegen.

**Revendications**

1. Sonde de mesure (300) destinée à un instrument de mesure (200), comprenant :

un corps (301) présentant un mode élastique d'oscillation,
une pointe de mesure (304) raccordée au dit corps (301),
un actionneur (305) conçu pour exciter ledit mode élastique d'oscillation dudit corps (301), et
au moins un élément de support (308) conçu pour la fixation dudit corps (301) sur un autre composant dudit instrument de mesure (200),

**caractérisée en ce que**
ledit ou lesdits éléments de support (308) sont raccordés au dit corps (301) au niveau d'une ou de plusieurs zones de fixation (330, 331, 332), chacune de ladite ou desdites zones de fixation (330, 331, 332) possédant une droite d'intersection avec un plan (333) coupant chacune de ladite ou desdites zones de fixation (330, 331, 332) et avec une extension (334) dans une direction perpendiculaire au dit plan (333), ladite extension (334) dans ladite direction perpendiculaire au dit plan (333) valant moins que la longueur de ladite droite d'intersection,
dans laquelle ledit corps (301) comporte un axe de symétrie en rotation (384) perpendiculaire au dit plan (333), et
dans laquelle ladite pointe de mesure (304) repose sur ledit axe de symétrie en rotation (384).

2. Sonde de mesure selon la revendication 1, dans laquelle chacune de ladite ou desdites zones de fixation (330, 331, 332) est une droite de fixation reposant dans ledit plan (333).

3. Sonde de mesure selon la revendication 2, dans laquelle ladite ou lesdites droites de fixation reposent dans un plan nodal dudit mode élastique d'oscillation et/ou reposent à moins d'au moins l'une d'une moitié de la hauteur totale dudit corps (301), d'un dixième de ladite hauteur totale dudit corps (301) et d'un centième de ladite hauteur totale à distance dudit plan nodal dudit mode élastique d'oscillation.

4. Sonde de mesure selon l'une quelconque des revendications 1 à 3, comprenant en outre un élément de retenue (309) possédant une ouverture, ledit élément de retenue présentant une symétrie en rotation, ledit axe de symétrie en rotation (384) dudit corps (301) représentant également un axe de symétrie en rotation dudit élément de retenue (309), ledit ou lesdits éléments de support (308) reliant ledit corps (301) et ledit élément de retenue (309).

5. Sonde de mesure selon la revendication 4, dans laquelle au moins l'un dudit élément de retenue (309) et dudit corps (301) présente une symétrie cylindrique.

6. Sonde de mesure selon l'une quelconque des revendications 1 à 5, dans laquelle, dans ledit mode élastique d'oscillation, les amplitudes de déplacement de parties dudit corps (301) dans ladite ou lesdites zones de fixation par rapport aux positions de repos desdites parties sont plus petites qu'au moins l'une de l'amplitude de déplacement de ladite pointe (304) par rapport à une position de repos de ladite pointe, d'une moitié de ladite amplitude de déplacement de ladite pointe et d'un dixième de ladite amplitude de déplacement de ladite pointe.

7. Sonde de mesure selon l'une quelconque des revendications 1 à 6, dans laquelle ledit actionneur (305) est prévu comme étant une partie dudit corps (301), et dans laquelle ledit ou lesdits éléments de support (308) sont raccordés au dit actionneur (305).

8. Sonde de mesure selon l'une quelconque des revendications 1 à 7, dans laquelle ledit ou lesdits éléments de support (308) comprennent un élément d'amortissement conçu pour réduire le facteur Q de modes élastiques d'oscillation dudit corps (301) différents dudit mode élastique d'oscillation.

9. Sonde de mesure selon l'une quelconque des revendications 1 à 8, dans laquelle au moins une partie dudit ou desdits éléments de support (308) est transparente.

10. Sonde de mesure selon la revendication 2, dans laquelle ledit ou lesdits éléments de support (308) comprennent :

une première partie comprenant un premier matériau,
une seconde partie comprenant un second matériau,
dans laquelle le facteur de perte par amortissement des vibrations dudit second matériau est supérieur au facteur de perte par amortissement des vibrations dudit premier matériau et dans laquelle le module de Young du premier matériau est supérieur au module de Young du second matériau.

11. Sonde de mesure selon la revendication 10, dans laquelle ledit ou lesdits éléments de support (308) comprennent un stratifié dudit premier matériau et dudit second matériau.

12. Sonde de mesure selon la revendication 10, dans laquelle ladite seconde partie dudit élément de support (308) est raccordée entre ladite première partie dudit élément de support (308) et ledit corps (301).

13. Sonde de mesure selon l'une quelconque des revendications 1 à 12, dans laquelle ledit ou lesdits éléments de support (308) comprennent au moins une partie dans laquelle l'épaisseur (335) dudit ou desdits éléments de support (308), dans une direction parallèle au dit axe de symétrie en rotation (384), augmente avec la distance à partir dudit axe de symétrie en rotation (384).

14. Sonde de mesure selon l'une quelconque des revendications 1 à 13, dans laquelle ledit ou lesdits éléments de support (308) comprennent au moins une partie dans laquelle la largeur (385) dudit ou desdits éléments de support (308), dans une direction perpendiculaire au dit axe de symétrie en rotation (384), augmente avec la distance à partir dudit axe de symétrie en rotation (384).

15. Microscope (200) comprenant :

une sonde de mesure (300) conforme à la revendication 1,
un microscope optique en champ lointain comprenant une lentille d'objectif (211), ladite sonde de mesure (300) étant placée entre ladite lentille d'objectif (211) et un plan focal de ladite lentille d'objectif (211), ledit axe de symétrie en rotation (384) dudit corps (301) étant aligné à l'axe optique (L1) dudit microscope optique en champ lointain, et
un actionneur de microscope (232) relié entre ladite lentille d'objectif (211) et ladite sonde de mesure (300) dans le but de déplacer ladite sonde de mesure (300) dans une direction sensiblement parallèle au dit axe optique (L1) dudit microscope optique en champ lointain.

FIG. 1
(prior art)

FIG. 2a

200

210

213

214

212

L2

234

L1

211

300

201

202

203

231

232

240

236

L4

237

238

239

242

241

L5

230

235

200

L1

231

232

11

201

202

300

203

FIG. 2b

FIG. 3a

FIG. 3b

350

351

355

355

357

359

356

354

353

354

356

352

358

FIG. 3c

FIG. 3d

EP 2 120 036 B1

FIG. 3e

FIG. 4a

FIG. 4b

FIG. 4c

FIG. 4d

EP 2 120 036 B1

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1653478 A